# EUROPEAN PATENT APPLICATION

(11) **EP 4 827 180 A1**
(43) Date of publication of application: **21.10.2026**
(21) Application number: 24902755.8
(22) Date of filing: 09.12.2024
(51) Int. Cl.: H04W 52/02

(54) **LOW POWER SIGNAL RECEIVING METHOD, AND TERMINAL AND NETWORK SIDE DEVICE**

(30) Priority: 13.12.2023 CN 202311720043
(71) Applicant: Vivo Mobile Communication Co., Ltd., Dongguan, Guangdong 523863 (CN)
(72) Inventor: WANG, Yi, Dongguan, Guangdong 523863 (CN); QU, Xin, Dongguan, Guangdong 523863 (CN); WU, Kai, Dongguan, Guangdong 523863 (CN); PAN, Xueming, Dongguan, Guangdong 523863 (CN)
(74) Representative: Walaski, Jan Filip
(86) International application number: PCT/CN2024/137766
(87) International publication number: WO 2025/124334

(57) **Abstract**

The present application relates to the technical field of wireless communications, and discloses a low power signal receiving method, and a terminal and a network side device. The low power signal receiving method of embodiments of the present application comprises: on the basis of a resource parameter configured for a target low power signal, a terminal determines at least one candidate occasion of the target low power signal; the terminal detects, within the at least one candidate occasion, the target low power signal sent by a network side device; and on the basis of the detected target low power signal, the terminal determines the spatial characteristics of the detected target low power signal, wherein the spatial characteristics comprise at least one of the following: spatial receiving characteristics, Doppler delay parameters, and time delay parameters.

## Description

### CROSS-REFERENCE TO RELATED APPLICATIONS

This application claims priority to Chinese Patent Application No. 202311720043.2, filed with the China National Intellectual Property Administration on December 13, 2023 and entitled "LOW-POWER SIGNAL RECEIVING METHOD, TERMINAL, AND NETWORK-SIDE DEVICE", which is incorporated herein by reference in its entirety.

### TECHNICAL FIELD

This application pertains to the field of wireless communication technologies, and specifically relates to a low-power signal receiving method, a terminal, and a network-side device.

### BACKGROUND

In new radio (New Radio, NR), a low-power wake-up module/receiver and low-power wake-up signals are introduced. When a mobile terminal is idle, the mobile terminal may be set to a deep sleep state by turning off a main communication module/receiver, relying solely on the low-power wake-up module/receiver to monitor the low-power wake-up signals, thereby achieving the purpose of reducing terminal power consumption.

A base station can send signals based on beams. For example, in an NR system, a base station may send multiple synchronization signal blocks (Synchronization Signal Block, SSB), where different SSBs may use different beams (beam sweeping) to achieve full-area coverage and expand the coverage range. Similarly, the base station can also send low-power signals based on beams, such as low-power synchronization signals (Low Power Synchronization Signal, LP-SS) and low-power wake-up signals (Low Power Wake Up Signal, LP-WUS).

In a case of multi-beam transmission (where multiple beams may be time-division multiplexed or transmitted simultaneously), no solution has been provided yet for how a terminal receives low-power signals.

### SUMMARY

An embodiment of this application provides a low-power signal receiving method, a terminal, and a network-side device, which can solve the issue of how a terminal receives low-power signals in a case of multi-beam transmission.

According to a first aspect, a low-power signal receiving method is provided, including: determining, by a terminal, based on a resource parameter configured for a target low-power signal, at least one candidate occasion for the target low-power signal; detecting, in the at least one candidate occasion by the terminal, the target low-power signal sent by a network-side device; and determining, by the terminal, a spatial characteristic of each detected target low-power signal based on the detected target low-power signal, where the spatial characteristic includes at least one of the following: a spatial Rx parameter, a Doppler delay parameter, and a time delay parameter.

According to a second aspect, a low-power signal sending method is provided, including: determining, by a network-side device based on a resource parameter configured for a target low-power signal, at least one candidate occasion for the target low-power signal; sending, by the network-side device based on a spatial characteristic of a target low-power signal to be sent, the target low-power signal on at least one target occasion among the at least one candidate occasion, where the spatial characteristic includes at least one of the following: a spatial Rx parameter, a Doppler delay parameter, and a time delay parameter.

According to a third aspect, a low-power signal receiving apparatus is provided, including: a first determining module, configured to determine, based on a resource parameter configured for a target low-power signal, at least one candidate occasion for the target low-power signal; a detecting module, configured to detect, in the at least one candidate occasion, the target low-power signal sent by a network-side device; and a second determining module, configured to determine a spatial characteristic of each detected target low-power signal based on the detected target low-power signal, where the spatial characteristic includes at least one of the following: a spatial Rx parameter, a Doppler delay parameter, and a time delay parameter.

According to a fourth aspect, a low-power signal sending apparatus is provided, including a third determining module, configured to determine, based on a resource parameter configured for a target low-power signal, at least one candidate occasion for the target low-power signal; a sending module, configured to send, based on a spatial characteristic of a target low-power signal to be sent, the target low-power signal on at least one target occasion among the at least one candidate occasion, where the spatial characteristic includes at least one of the following: a spatial Rx parameter, a Doppler delay parameter, and a time delay parameter.

According to a fifth aspect, a terminal is provided, where the terminal includes a processor and a memory. The memory stores a program or instructions executable on the processor, and when the program or instructions are executed by the processor, the steps of the method according to the first aspect are implemented.

According to a sixth aspect, a terminal is provided, including a processor and a communication interface, where the processor is configured to implement the steps of the method according to the first aspect, and the communication interface is configured to be coupled to the processor.

According to a seventh aspect, a network-side device is provided, where the network-side device includes a processor and a memory. The memory stores a program or instructions executable on the processor, and when the program or instructions are executed by the processor, the steps of the method according to the second aspect are implemented.

According to an eighth aspect, a network-side device is provided, including a processor and a communication interface, where the processor is configured to implement the steps of the method according to the second aspect, and the communication interface is configured to be coupled to the processor.

According to a ninth aspect, a readable storage medium is provided, where a program or instructions are stored in the readable storage medium, and when the program or instructions are executed by a processor, the steps of the method according to the first aspect are implemented, or the steps of the method according to the second aspect are implemented.

According to a tenth aspect, a wireless communication system is provided, including: a terminal and a network-side device, where the terminal may be configured to implement the steps of the method according to the first aspect, and the network-side device may be configured to implement the steps of the method according to the second aspect.

According to an eleventh aspect, a chip is provided, where the chip includes a processor and a communication interface. The communication interface and the processor are coupled, and the processor is configured to run a program or instructions to implement the steps of the method according to the first aspect, or to implement the steps of the method according to the second aspect.

According to a twelfth aspect, a computer program/program product is provided. The computer program/program product is stored in a storage medium, and the program/program product is executed by at least one processor to implement the steps of the method according to the first aspect, or to implement the steps of the method according to the second aspect.

In the embodiments of this application, a terminal determines, based on a resource parameter configured for a target low-power signal, at least one candidate occasion for the target low-power signal; the terminal detects, in the at least one candidate occasion, the target low-power signal sent by a network-side device; and the terminal determines a spatial characteristic of each detected target low-power signal based on the detected target low-power signal, where the spatial characteristic includes at least one of the following: a spatial Rx parameter, a Doppler delay parameter, and a time delay parameter. Thus, in a case of multi-beam transmission, the terminal can detect, on at least one candidate occasion based on the resource parameter configured for the target low-power signal, the target low-power signal sent by the network-side device, and determine the spatial characteristic of each detected target low-power signal, thereby implementing reception of the low-power signal.

### BRIEF DESCRIPTION OF DRAWINGS

FIG. 1 shows a block diagram of a wireless communication system to which an embodiment of this application is applicable;
FIG. 2 is a schematic diagram of operation of a low-power receiver;
FIG. 3 is a schematic flowchart of a low-power signal receiving method according to an embodiment of this application;
FIG. 4 is a schematic diagram of timing in an embodiment of this application;
FIG. 5 is a schematic diagram of another timing in an embodiment of this application;
FIG. 6 is a schematic diagram of still another timing in an embodiment of this application;
FIG. 7 is a schematic diagram of still another timing in an embodiment of this application;
FIG. 8 is a schematic diagram of still another timing in an embodiment of this application;
FIG. 9 is a schematic diagram of still another timing in an embodiment of this application;
FIG. 10 is a schematic diagram of still another timing in an embodiment of this application;
FIG. 11 is a schematic diagram of still another timing in an embodiment of this application;
FIG. 12 is a schematic diagram of still another timing in an embodiment of this application;
FIG. 13 is a schematic diagram of still another timing in an embodiment of this application;
FIG. 14 is a schematic diagram of still another timing in an embodiment of this application;
FIG. 15 is a schematic diagram of still another timing in an embodiment of this application;
FIG. 16 is a schematic diagram of still another timing in an embodiment of this application;
FIG. 17 is a schematic diagram of still another timing in an embodiment of this application;
FIG. 18 is a schematic flowchart of a low-power signal sending method according to an embodiment of this application;
FIG. 19 is a schematic structural diagram of a low-power signal receiving apparatus according to an embodiment of this application;
FIG. 20 is a schematic structural diagram of a low-power signal sending apparatus according to an embodiment of this application;
FIG. 21 is a schematic structural diagram of a communication device according to an embodiment of this application;
FIG. 22 is a schematic diagram of a hardware structure of a terminal according to an embodiment of this application; and
FIG. 23 is a schematic diagram of a hardware structure of a network-side device according to an embodiment of this application.

### DESCRIPTION OF EMBODIMENTS

The technical solutions in the embodiments of this application are clearly described below with reference to the drawings in the embodiments of this application. Obviously, the described embodiments are some embodiments rather than all embodiments of this application. Based on the embodiments of this application, all other embodiments obtained by those of ordinary skill in the art fall within the protection scope of this application.

The terms "first", "second", and the like in this application are used to distinguish between similar objects rather than to describe a specific order or sequence. It should be understood that the terms used in this way can be interchanged under appropriate circumstances, so that the embodiments of this application can be implemented in sequences other than those illustrated or described herein, and "first" and "second" distinguish objects of one type, and do not limit the number of objects, for example, there may be one or more first objects. In addition, "or" in this application indicates at least one of the connected objects. For example, "A or B" covers three cases, which are, case 1: including A but not B; case 2: including B but not A; and case 3: including both A and B. The character "/" generally indicates that the contextually associated objects are in an "or" relationship.

The term "indication" in this application may be a direct indication (or explicit indication), or an indirect indication (or implicit indication). The direct indication can be understood as that a sender explicitly informs a receiver of content such as specific information, an operation to be executed, or a request result in a sent indication; and the indirect indication can be understood as that a receiver determines corresponding information based on an indication sent by a sender, or makes a judgment and determines an operation to be executed, a request result, and the like based on the judgment result.

It is worth pointing out that the technology described in the embodiments of this application is not limited to long term evolution (Long Term Evolution, LTE)/LTE-advanced (LTE-Advanced, LTE-A) systems, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are usually used interchangeably, and the described technology can be used in the above-mentioned systems and radio technologies, as well as in other systems and radio technologies. The following description describes a new radio (New Radio, NR) system for exemplary purposes, and uses NR terminology in most of the following description, but these technologies can also be applied to systems other than NR systems, such as the 6th Generation (6th Generation, 6G) communication system.

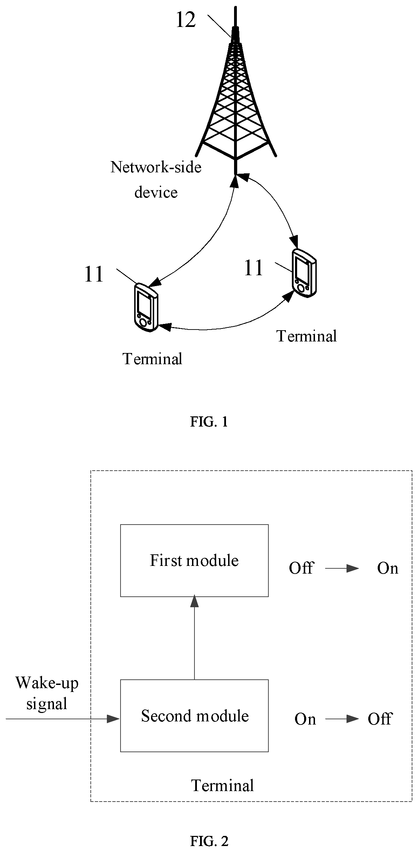

FIG. 1 shows a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), a ship-borne device, pedestrian user equipment (Pedestrian User Equipment, PUE), a smart home device (home device with wireless communication functions, such as a refrigerator, TV, washing machine, or furniture), a game console, a personal computer (Personal Computer, PC), an automated teller machine, or a self-service machine. Wearable devices include: smart watches, smart bracelets, smart headphones, smart glasses, smart jewelry (smart bangles, smart straps, smart rings, smart necklaces, smart ankle straps, smart foot chains, and the like), smart wristbands, smart clothing, and the like. Vehicle user equipment may also be referred to as vehicle-borne terminals, vehicle-borne controllers, vehicle-borne modules, vehicle-borne components, vehicle-borne chips, or vehicle-borne units, and the like. It should be noted that the specific type of the terminal 11 is not limited in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or some other suitable terms in the art, as long as a same technical effect is achieved, and the base station is not limited to specific technical terms. It should be noted that in the embodiments of this application, a base station in an NR system is taken as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that in the embodiments of this application, a core network device in an NR system is taken as an example for introduction, and the specific type of the core network device is not limited.

To better understand the technical solutions provided in this application, related technologies involved in this application are first introduced.

### 1. LP-SS and LP-WUR

3GPP will start research work on introducing low-power wake-up receivers (Low Power Wake Up Receiver, LP WUR)/wake-up signals (wake-up signal, WUS) into mobile cellular systems in Rel-18. The basic operating principle of LP WUR is: a receiving terminal includes a first module and a second module, where the first module is a main communication module, configured to receive communication data transmitted by a sending terminal and send communication data; the second module is a low-power module, configured to receive low-power wake-up signals (LP-WUS) and low-power synchronization signals (LP-SS) sent by the sending terminal; the low-power wake-up signals are used to wake up the main communication module of the receiving terminal; and the low-power synchronization signals are used to provide time reference information and other information for receiving the low-power wake-up signals, for example, used for RRM measurement of a serving cell as well as for providing wake-up link management. As shown in FIG. 2, when not woken up by the second module, the first module remains in an off state and does not send or receive data. When downlink data arrives, the second module detects a wake-up signal sent by the sending terminal, and if the wake-up signal includes information of this terminal, the second module triggers the first module to switch from the off state to an operating state to receive and send data. The second module may operate continuously or non-continuously, and while operating, the second module can receive low-power wake-up signals and low-power synchronization signals.

### 2. Beam-based transmission in NR system

In an NR system, a base station can use different beams to send different SSBs, and achieve coverage in various directions through beam sweeping. The number of the SSBs may be configured through an *ssb-PositionsInBurst* parameter. The SSBs have different SSB indices (index). The SSB index is carried in a demodulation reference signal (Demodulation Reference Signal, DMRS) of a physical broadcast channel (Physical broadcast channel, PBCH), or carried in the DMRS of the PBCH and payload (payload) of the PBCH. The SSBs may be sent periodically, and all SSBs indicated by *ssb-PositionsInBurst* are sent within one period, where all these SSBs may be referred to as a group of SSBs or an SSB burst (burst). UE assumes that SSBs with different SSB indices do not satisfy a quasi co-location (Quasi co-location, QCL) relationship, while SSBs with a same SSB index satisfy the QCL relationship and can be combined. For example, SSBs with a same SSB index across periods are combined to obtain a measurement result of a same beam (beam).

An SSB burst may be located in either the first half frame or the second half frame of a frame. Within a half frame, a time location of an SSB burst is predefined by the standard.

In licensed frequency bands, within one period, each SSB has only one occasion (occasion), and the time location is predefined by the standard. In unlicensed frequency bands, to mitigate the impact of listen-before-talk (listen-before-talk, LBT), each SSB may have N occasions within one period, where N ≥ 1, and the time locations of the N occasions are predefined by the standard. The base station may send the SSB at any location of the N occasions. A time relationship among multiple occasions for the SSBs with different SSB indices is as follows: the first occasions for the SSB indices are arranged in sequence, followed by the second occasions for the SSB indices arranged in sequence, and so on. Within all periods, the occasion locations as well as the correspondence between the SSB indices and the occasions for the all SSBs are the same. For example, the first eight occasions within each period correspond to the first occasions for the SSB1 to SSB8, and the last eight occasions within each period correspond to the second occasions for the SSB1 to SSB8. The UE assumes that SSBs with different SSB indices do not satisfy the QCL relationship, while SSBs with a same SSB index satisfy the QCL relationship and can be combined. For example, SSBs with a same SSB index across periods are combined to obtain a measurement result of a same beam.

However, in a conventional NR system, the occasions for each SSB are predefined by the standard. Within all periods, the locations of occasions, the correspondence between occasions and SSB indices, and the correspondence between occasions and beams of each SSB index are unchanged. In addition, the occasions are located in a same or adjacent slots (slot). Each SSB index is explicitly indicated through DMRS or through DMRS+PBCH payload. For other signals in the NR system, such as channel state information reference signals (Channel State Information Reference Signal, CSI-RS), if the base station uses a same beam for sending, an SSB index of a QCL reference signal (reference signal) SSB may be configured.

For low-power signal sending, conventional SSB occasions cannot meet the requirements. For example, the number of orthogonal frequency division multiplexing (Orthogonal frequency division multiplex, OFDM) symbols occupied by one low-power signal is usually greater than that of an SSB, so one SSB occasion cannot carry one low-power signal. Moreover, locations of SSB occasions are relatively fixed, and the SSB indices sent in the occasions and the beams corresponding to the SSBs are relatively fixed, resulting in insufficient flexibility, and thus causing significant impact on sending of other NR signals. In addition, since information carried by a low-power signal is limited, for example, the LP-SS is a sequence-based signal, it may be unable to carry an LP-SS index. Therefore, the UE cannot reuse the method of determining whether multiple SSBs satisfy QCL based on the SSB index to determine whether multiple LP-SSs satisfy QCL, and also cannot reuse the method of configuring the SSB index as QCL reference signal information to determine a QCL relationship between an LP-SS and an LP-WUS.

Therefore, in the related art, no solution is provided for how a terminal receives low-power signals in a case of multi-beam transmission. To address this issue, an embodiment of this application provides a low-power signal receiving solution.

The low-power signal receiving solution provided in this embodiment of this application is described in detail below with reference to the accompanying drawings through some embodiments and application scenarios thereof.

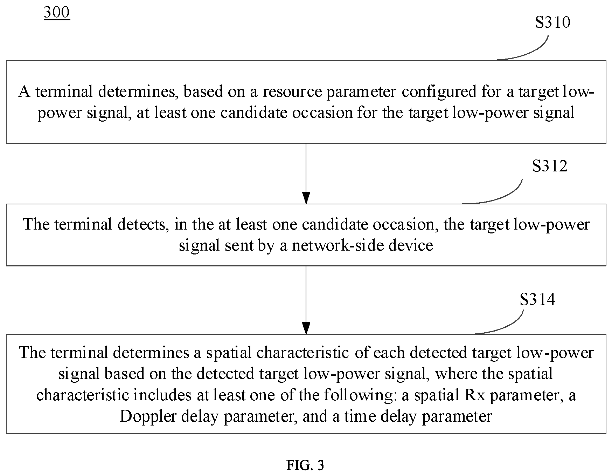

FIG. 3 is a schematic flowchart of a low-power signal receiving method in an embodiment of this application. The method 300 may be performed by a terminal. In other words, the method may be performed by software or hardware installed in the terminal. As shown in FIG. 3, the method may include the following steps.

S310. The terminal determines, based on a resource parameter configured for a target low-power signal, at least one candidate occasion for the target low-power signal.

In this embodiment of this application, the terminal may determine, based on at least one of a resource parameter configured by a network-side device for the target low-power signal and a resource parameter configured by a protocol, at least one candidate occasion (occasion) of the target low-power signal. For example, all parameters included in the resource parameters may be configured by the network-side device or the protocol, or some parameters included in the resource parameters may be configured by the network-side device, and some other parameters are predefined by the protocol. For example, periods and the number of the candidate occasions are configured by the network-side device, and a time duration of each candidate occasion is configured by the protocol. For another example, the periods, the number of the candidate occasions, and the time duration of each candidate occasion are configured, but spatial characteristics are predefined by the protocol.

For example, the network-side device configures resource parameters of LP-SS/LP-WUS for the UE. The UE determines resources of LP-SS/LP-WUS based on the resource parameters of LP-SS/LP-WUS configured by the network-side device for the UE and the resource parameters predefined by the standard, for example, determining candidate locations (occasion) of LP-SS/LP-WUS as well as time domain, frequency domain, code domain, and space domain information and channel structure of LP-SS/LP-WUS sent in each candidate location. The time domain, frequency domain, code domain, and space domain information may include: a spatial sending characteristic, a spatial Rx diameter, a Doppler characteristic, a time delay characteristic, and the like.

In an optional implementation, the resource parameter includes but is not limited to at least one of the following: a sending period of a target low-power signal, a reception time window duration of a target low-power signal, candidate occasion information within a reception time window of a target low-power signal, candidate occasion information within one sending period, spatial characteristics corresponding to each candidate occasion, and a repetition number of a target low-power signal.

The sending period of the target low-power signal is used to indicate the sending period of the target low-power signal. The reception time window duration of the target low-power signal is used to indicate the reception time window duration of the target low-power signal. The candidate occasion information within the reception time window of the target low-power signal is used to indicate candidate occasions included in a reception window of the target low-power signal. The candidate occasion information within one sending period is used to indicate candidate occasions in the sending period of the target low-power signal. The spatial characteristics corresponding to each candidate occasion are used to determine spatial characteristics of the target low-power signal sent on each candidate occasion. The repetition number of the target low-power signal is used to indicate the number of repeated transmissions of the target low-power signal.

Optionally, the candidate occasion information within the reception time window of the target low-power signal or the candidate occasion information within one sending period includes but is not limited to at least one of the following: a time duration of one candidate occasion, a time interval between two adjacent candidate occasions, a time interval between two adjacent candidate occasion sets (occasion set), the number of the candidate occasions, the number of the candidate occasion sets, and the number of candidate occasions in one candidate occasion set.

Optionally, the candidate occasion sets include a same number of candidate occasions.

Optionally, the candidate occasion sets may include different numbers of candidate occasions. For example, limited by the reception time window duration, the candidate occasion sets include different numbers of candidate occasions. Alternatively, the network-side device can configure the number of candidate occasions for each candidate occasion set.

Optionally, the above resource parameter may be provided with one time interval, where the time interval is a time interval between the candidate occasions within one target time period.

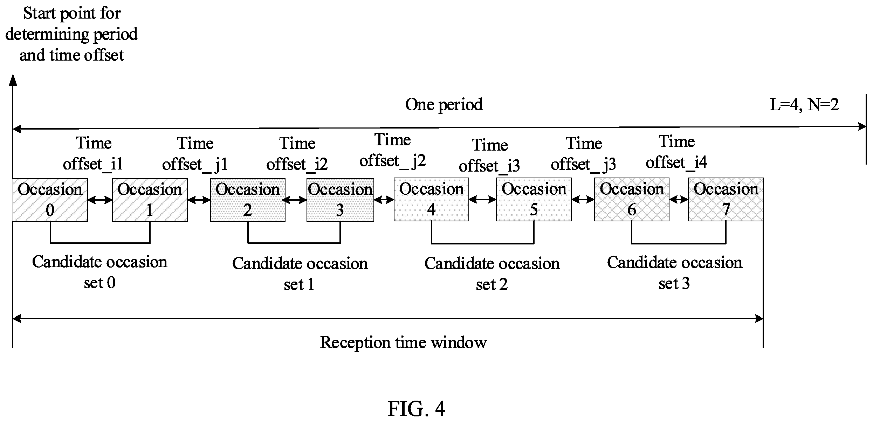

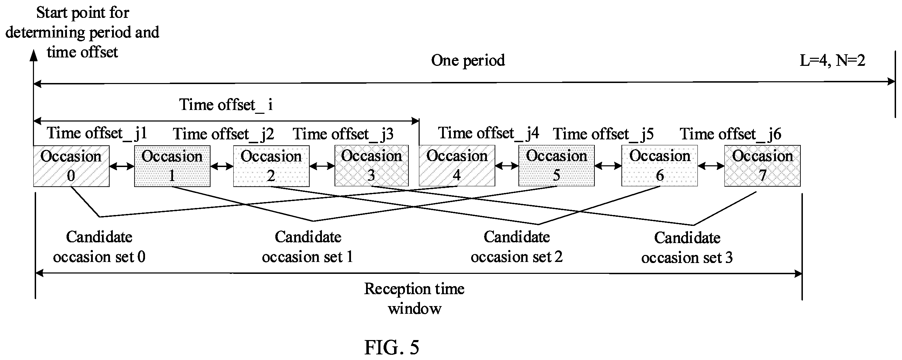

For example, in FIG. 4, the values of Offset_i1, Offset_i2, Offset _i3, Offset _i4, Offset_j1, Offset_j2, and Offset_j3 are the same, and the network-side device indicates or the protocol predefines and indicates one value. In FIG. 5, the values of Offset_j1, Offset_j2, Offset_j3, Offset_j4, Offset_j5, Offset_j6, and Offset_i are the same, and a network node indicates only one value.

The terminal can determine a time resource of each occasion based on a time resource of the first occasion, the time interval, and the number of the candidate occasions within each period.

Optionally, the above resource parameter may be provided with two time intervals, where one time interval is a time interval between the candidate occasion in one candidate occasion set (occasion set), and the other time interval is a time interval between the candidate occasion sets.

For example, in FIG. 4, Offset _i1, Offset_i2, Offset_i3, and Offset_i4 are the same, which are time intervals between the candidate occasions in one candidate occasion set (occasion set); and the values of Offset_j1, Offset _j2, and Offset_j3 are the same, which are time intervals between the candidate occasion sets. In FIG. 5, Offset_i is the time interval between the candidate occasions in one candidate occasion set (occasion set), and the values of Offset_j1, Offset_j2, Offset_j3, Offset_j4, Offset_j5, and Offset_j6 are the same, which are time intervals between the candidate occasion sets.

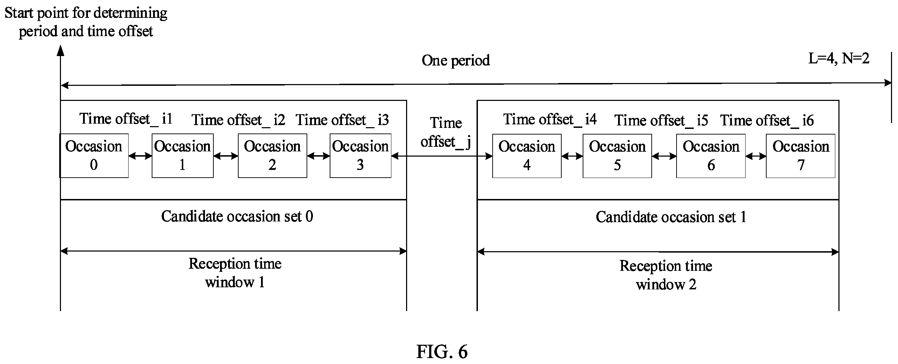

In FIG. 6, Offset_i1, Offset_i2, Offset_i3, Offset_i4, Offset_i5, and Offset_i6 are the same, which are the time intervals between the candidate occasions in one candidate occasion set (occasion set). Offset_j is a time interval between the candidate occasion sets.

The terminal can determine the time resource of each occasion based on the time resource of the first occasion within each period, the above two time intervals, and the number of the occasions.

Optionally, the above resource parameter may be provided with multiple time intervals, where one time interval is an interval between the occasions in one occasion set, the other time intervals are time intervals between the occasion sets, and the occasion sets may have the same or different time intervals. The terminal can determine the number of the occasion sets based on the number of time intervals, or the number of the occasion sets is predefined by the protocol or configured by the network-side device.

The terminal can determine the time resource of each occasion according to the time resource of the first occasion within each period, the multiple time intervals, and the number of the occasions.

Optionally, the spatial characteristics corresponding to each candidate occasion may include at least one of the following (1) to (6).
(1) Within a same target time period, target low-power signals corresponding to candidate occasions in one candidate occasion set have a same spatial characteristic. That is, the occasions in one occasion set correspond to a same characteristic, for example, corresponding to a same spatial Rx diameter or satisfying the same Doppler and time delay parameters.

As shown in FIG. 4 and FIG. 5, assuming that within one period, the number L of LP-SSs sent by the network-side device is equal to 4, and the number N of occasions for each LP-SS is equal to 2, a total number O of the occasions is equal to 8. Therefore, the N occasions for one LP-SS form one occasion set. Different LP-SSs correspond to different occasion sets. In the N occasions for one LP-SS, the network-side device can send the LP-SS in only one occasion.

The network-side device can configure a reference signals, for example, configure an LP-SS or SSB as a reference signal for an LP-WUS, and it is considered that the reference signal and the LP-WUS have a same spatial Rx diameter. For example, the network-side device configures SSB1, SSB2, SSB3, and SSB4 as reference signals. Therefore, the four SSBs sequentially have a same spatial Rx diameter with the four occasion sets for the LP-WUSs.

(2) Within a same target time period, target low-power signals corresponding to candidate occasions in a same candidate occasion set have different spatial characteristics. That is, the occasions in one occasion set may correspond to different characteristics.

For example, as shown in FIG. 5, assuming that within one period, the number L of LP-SSs sent by the network-side device is equal to 4, and the number N of occasions for each LP-SS is equal to 2, a total number O of the occasions is equal to 8. The network-side device or the protocol can configure two occasion sets, and time locations of the occasions in each occasion set are relatively concentrated. The network-side device sends only two LP-SSs in eight occasions. For example, only two LP-SSs are sent in one occasion, or only one LP-SS is sent in each occasion.

(3) Within a same target time period, target low-power signals corresponding to candidate occasions whose candidate occasion locations or candidate occasion indices satisfy a predefined relationship have a same spatial characteristic.

The terminal may assume that an occasion index corresponding to the i-th occasion within one reception time window of the target low-power signal or within one period is i or i-1. For example, if the value of the occasion index starts from 0, the occasion index of the 1st occasion is 0. Alternatively, the terminal assumes that a candidate occasion set index corresponding to the i-th candidate occasion set within one reception time window of the target low-power signal or within one period is i or i-1. For a group of occasions corresponding to one occasion set i, the relationship between the occasion index of each occasion and the occasion set index i is predefined or may be configured by the network-side device.

For example, if (i mod L)=j, occasion index i belongs to occasion set j, or if floor(i/N)=j, occasion index i belongs to occasion set j, where L and N are configured or predefined by the standard. Characteristics of the target low-power signals are same spatial Rx diameters, and the network-side device can configure a reference signal, for example, configure an LP-SS or SSB as a reference signal for an LP-WUS, and it is considered that the reference signal and the LP-WUS have a same spatial Rx diameter.

(4) Within a same target time period, target low-power signals corresponding to candidate occasions have a same spatial characteristic. For example, the network-side device can configure one reference signal, and the reference signal and the LP-WUS corresponding to candidate occasions for the LP-WUS have a same spatial characteristic.

(5) Across target time periods, target low-power signals corresponding to candidate occasions in a same candidate occasion set have a same spatial characteristic.

(5) may be combined with (1). Therefore, within a same or different target time periods, target low-power signals corresponding to candidate occasions in a same candidate occasion set have a same spatial characteristic.

(6) Across target time periods, target low-power signals corresponding to candidate occasions in a same candidate occasion set do not have a same spatial characteristic.

(6) may be combined with (1). Therefore, within a same target time period, target low-power signals on candidate occasions in a same candidate occasion set satisfy a same spatial characteristic; and across target time periods, target low-power signals on candidate occasions in a same candidate occasion set do not satisfy a same spatial characteristic.

(7) Across target time periods, target low-power signals corresponding to candidate occasions in two candidate occasion sets satisfying a first predetermined relationship among different candidate occasion sets have a same spatial characteristic.

(7) may be combined with (3). Therefore, within a same or different target time periods, target low-power signals corresponding to candidate occasions in two candidate occasion sets satisfying a first predetermined relationship among different candidate occasion sets have a same spatial characteristic.

For example, if occasion set i and occasion set j satisfy (i mod L1)=(j mod L2), across target time periods, the target low-power signals on candidate occasions in occasion set i and occasion set j satisfy a same spatial characteristic, where L1 may be the number of signals within one sending period of the target low-power signals corresponding to occasion set i, and L2 is the number of signals within one sending period of the target low-power signals corresponding to occasion set j.

In an optional implementation, space domain characteristics of the target low-power signals may be same spatial Rx diameters, and the network-side device can configure a reference signal, for example, configure an LP-SS or SSB as a reference signal for an LP-WUS, and it is considered that the reference signal and the LP-WUS have a same spatial Rx diameter.

Optionally, the configured reference signal information includes a signal type, such as LP-SS or SSB, and the configured reference signal information may further include one of an index of the signal, an index of the occasion set, an index of the occasion, and an index of resource configuration, such as an LP-SS index, an SSB index, or an index of an LP-SS occasion.

The configured reference signal information may include only one reference signal or a group of reference signals. When a group of reference signals are configured, the reference signals may be considered as the reference signals for each occasion set in sequence. If the number of the occasion sets L and the number of the configured reference signals are not equal, the relationship between the reference signals and the occasion sets may be determined based on a predefined rule. For example, the number of the occasion sets is L, the number of the configured reference signals is Lr, and L/Lr=A, so that every A occasion sets correspond to one reference signal.

If no reference signal information is configured, it can be understood as that there is no reference signal, or the reference signal is determined based on a predefined rule, for example, the SSB indicated in *ssb-PositionsInBurst* is a reference signal.

When an LP-WUR receives an SSB signal, although it may be unable to receive a DMRS of a PBCH and the PBCH and unable to directly obtain an SSB index, the LP-WUR can determine the SSB index of the received SSB based on time information of a main receiver (MR) and a time location corresponding to the SSB index.

In an optional implementation, the resource parameter configured by the network-side device or the protocol may include multiple sets of resource parameters, and within one target time period, the spatial characteristics corresponding to each candidate occasion satisfy one of the following (1) to (3).
(1) Target low-power signals corresponding to candidate occasions configured in one set of resource parameters have a same signal characteristic. That is, the target low-power signals detected on candidate occasions configured in one set of resource parameters have a same signal characteristic.
(2) In the candidate occasions configured in one set of resource parameters, target low-power signals corresponding to candidate occasions whose candidate occasion locations or candidate occasion indices satisfy a predefined relationship have a same spatial characteristic. That is, in the candidate occasions configured in one set of resource parameters, target low-power signals detected on multiple candidate occasions whose candidate occasion locations or candidate occasion indices satisfy a predefined relationship have a same signal characteristic.
(3) For multiple candidate occasion sets configured in one set of resource parameters, target low-power signals corresponding to candidate occasions in a same candidate occasion set have a same signal characteristic. That is, in the multiple candidate occasion sets configured in one set of resource parameters, the target low-power signals detected on the candidate occasions in a same candidate occasion set have a same signal characteristic.

For example, the network-side device configures one or more sets of LP-SS resource parameters, or the network-side device configures one or more sets of LP-WUS resource parameters. The occasions in one set of resources correspond to a same characteristic, for example, corresponding to a same spatial Rx diameter or satisfying the same Doppler and time delay parameters.

For example, the network-side device configures four sets of LP-WUS resource parameters, and LP-WUS resources corresponding to each set of LP-WUS resource parameters correspond to a same QCL type-A (type-A) or QCL type-D (type-D). It can be considered that each set of LP-WUS resources corresponds to one LP-WUS resource index or LP-WUS index. The network-side device can also configure reference signal LP-SSs for each set of LP-WUSs, and it is considered that the LP-SSs and LP-WUSs have a same characteristic. In this example, it can be considered that there is no occasion set, or one set of LP-WUSs corresponds to one occasion set, where the occasions in this occasion set correspond to a same characteristic. Alternatively, as shown in FIG. 3 to FIG. 5, multiple occasion sets represent multiple reception time windows.

For another example, the network-side device configures one set of LP-SS resource parameters, and the network-side device configures one set of LP-WUS resource parameters. Multiple occasion sets are configured in one set of resource parameters, the occasions in each occasion set correspond to a same characteristic, and different occasion sets may correspond to different characteristics, such as different spatial Rx diameters or different Doppler and time delay parameters.

S312. The terminal detects, in the at least one candidate occasion, the target low-power signal sent by the network-side device.

After determining the at least one candidate occasion for the target low-power signal, the terminal can determine that the network-side device may send the target low-power signal in the at least one candidate occasion. Therefore, the terminal detects, in the at least one candidate occasion, the target low-power signal sent by the network-side device.

S314. The terminal determines a spatial characteristic of each detected target low-power signal based on the detected target low-power signal, where the spatial characteristic includes at least one of the following: a spatial Rx parameter, a Doppler delay parameter, and a time delay parameter.

In this embodiment of this application, the terminal can determine, based on the above resource parameter, at least one of an index (index) of each candidate occasion, an index of each candidate occasion set, and an index of each target low-power signal; and the terminal can determine a spatial characteristic of the detected target low-power signal based on at least one of an index of a candidate occasion in which the detected target low-power signal is located, the index of the candidate occasion set, and the index of the target low-power signal.

In this embodiment of this application, after detecting the target low-power signal on one or more target occasions in the at least one candidate occasion, the terminal can determine the spatial characteristic of each detected target low-power signal based on the detected target low-power signal. Thus, in a case of multi-beam transmission, the terminal can detect, on at least one candidate occasion based on a resource parameter configured by the network-side device or the protocol, a target low-power signal sent by the network-side device, and determine a spatial characteristic of each detected target low-power signal, thereby implementing reception of low-power signals.

In an optional implementation, the target low-power signal may include at least one of a first low-power signal and a second low-power signal, where the first low-power signal and the second low-power signal are different types of low-power signals. In this optional implementation, the target low-power signal may include different types of low-power signals. For example, the target low-power signal may include at least one of an LP-WUS, an LP-SS, and an SSB. For example, for an OFDM-based LP-WUR, the first low-power signal and the second low-power signal may be an LP-WUS and an SSB respectively. For an OOK-based LP-WUR, the first low-power signal and the second low-power signal may be an LP-WUS and an LP-SS respectively.

In an optional implementation, the above resource parameter may include a resource parameter configured for the first low-power signal and a resource parameter configured for the second low-power signal.

Optionally, the resource parameter configured for the first low-power signal and the resource parameter configured for the second low-power signal may be independent of each other, where the terminal determines at least one candidate occasion for the first low-power signal based on the resource parameter configured for the first low-power signal, and determines at least one candidate occasion for the second low-power signal based on the resource parameter configured for the second low-power signal. For example, the protocol or the network-side device can configure resource parameters of an LP-SS and an LP-WUS respectively, and the terminal determines resources of the LP-SS and the LP-WUS based on the parameters of the LP-SS and the LP-WUS respectively.

Alternatively, the resource parameter configured for the first low-power signal and the resource parameter configured for the second low-power signal may be dependent on each other. For example, for time resource parameters included in the resource parameter, the network-side device or the protocol can configure a time resource parameter for the first low-power signal, and configure, for the second low-power signal, a time offset parameter of the second low-power signal relative to the first low-power signal. In this case, the terminal can determine time resource information of at least one first candidate occasion for the first low-power signal based on the time resource parameter configured for the first low-power signal, and then determine time resource information of at least one second candidate occasion for the second low-power signal based on the time resource information of the at least one first candidate occasion for the first low-power signal and the time offset parameter.

For example, the protocol or the network-side device configures a resource parameter of the first low-power signal, and configures at least a time offset parameter of the second low-power signal relative to a resource of the first low-power signal. The terminal determines the resource of the first low-power signal based on the parameter of the first low-power signal, and determines the resource of the first low-power signal based on the parameter of the first low-power signal and the parameter of the second low-power signal relative to the resource of the first low-power signal. The first low-power signal may be an LP-SS, and the second low-power signal is an LP-WUS. Alternatively, the first low-power signal may be an LP-WUS, and the second low-power signal is an LP-SS.

In an implementation, the time offset parameter may be a time offset between the first candidate occasion for the first low-power signal and the first candidate occasion for the second low-power signal within one target time period, so that the terminal can determine a time location of the 1st second candidate occasion for the second low-power signal based on time resource information of the 1st first candidate occasion for the first low-power signal, and then determine a time location of another second candidate occasion for the second low-power signal within the target time period based on time location of the 1st second candidate occasion for the second low-power signal, where the another second candidate occasion is a second candidate occasion other than the 1st second candidate occasion for the second low-power signal within the target time period.

For example, the network-side device configures one time offset parameter, where the time offset parameter may be a time offset between a first candidate location (occasion) for the first low-power signal and a first candidate location (occasion) for the second low-power signal within the target time period. The UE determines a time location of the first occasion for the second low-power signal based on the time offset parameter and the time resource of the first occasion for the first low-power signal. In addition, the UE determines, based on the time location of the first occasion for the second low-power signal, a time location of another occasion for the second low-power signal within the specific time period.

In another implementation, the time offset parameter may be a time offset between the 1st first candidate occasion for the first low-power signal and the 1st second candidate occasion for the second low-power signal that correspond to a same characteristic within one target time period, so that the terminal can determine, based on time resource information of the 1st first candidate occasion for the first low-power signal, a time location of the 1st second candidate occasion for the second low-power signal, and then determine, based on the time location of the 1st second candidate occasion for the second low-power signal, a time location of another second candidate occasion for the second low-power signal corresponding to the same characteristic within the target time period, where the another second candidate occasion is a second candidate occasion other than the 1st second candidate occasion for the second low-power signal within the target time period.

For example, the network-side device configures one time offset parameter, where the time offset parameter is a time offset between the first occasion for the first low-power signal and the first occasion for the second low-power signal that correspond to a same characteristic within the target time period. The UE determines, based on the time offset parameter and the time resource of the first occasion for the first low-power signal, a time location of the first occasion for the second low-power signal. In addition, the UE determines, based on the time location of the first occasion for the second low-power signal, a time location of another occasion for the second low-power signal corresponding to a same characteristic within the specific time period.

Optionally, the above same characteristic refers to a same spatial characteristic. For example, a same spatial Rx diameter such as QCL type-D is satisfied, or same Doppler and time delay parameters such as QCL type-A are satisfied.

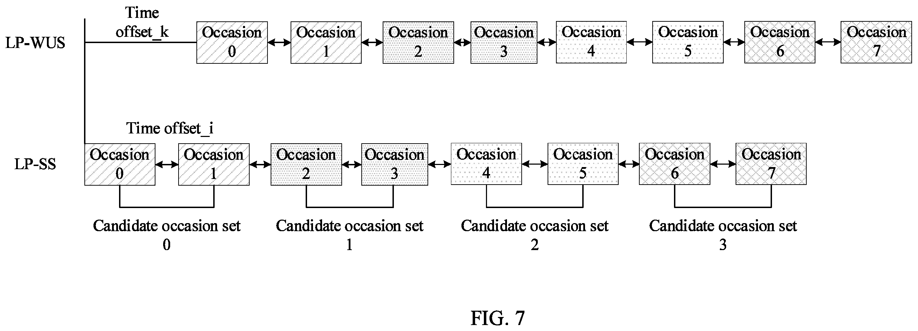

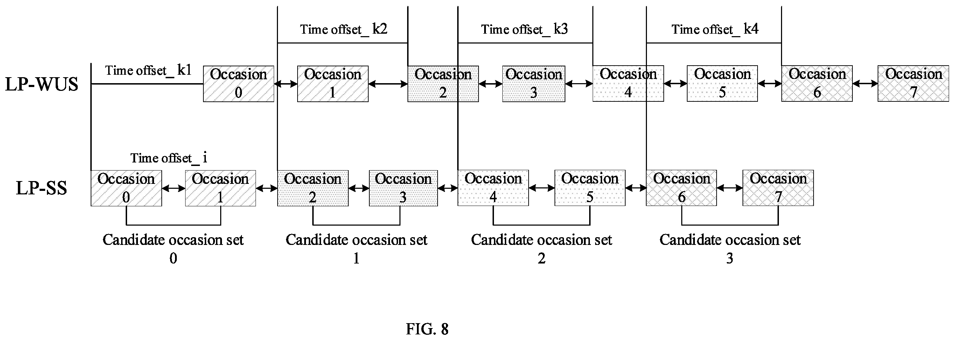

In the above optional implementation, optionally, the time offset parameter is provided in plurality, where each time offset parameter corresponds to one group of low-power signals satisfying a same characteristic. For example, as shown in FIG. 8, the network-side device or the protocol configures time offset parameters for each group of low-power signals satisfying a same characteristic respectively; or there is one time offset parameter, where the one time offset parameter corresponds to each group of low-power signals satisfying a same characteristic. For example, as shown in FIG. 7, the network-side device or the protocol configures one time offset parameter, which is applicable to each group of low-power signals satisfying a same characteristic.

It should be noted that although N and L of the LP-WUS and LP-SS are the same in FIG. 7 and FIG. 8, this embodiment of this application does not limit that the numbers N and L of the first low-power signals and the second low-power signals are the same, and the numbers N and L of the first low-power signals and the second low-power signals may alternatively be different.

The target time period in each implementation of this embodiment of this application may include one of the following: a sending period of the first low-power signal, a sending period of the second low-power signal, a time period configured in the resource parameter, and a target time period, where the target time period is the least common multiple of the sending period of the first low-power signal and the sending period of the second low-power signal.

In an optional implementation, the terminal can determine, based on the at least one candidate occasion for the target low-power signal, an index of each candidate occasion or each candidate occasion set of the target low-power signal within one time window, where the time window includes one of the following: a reception time window of the target low-power signal and a sending period of the target low-power signal.

For example, the terminal may assume that an occasion index corresponding to the i-th occasion within one reception time window of the target low-power signal or within one sending period is i or i-1. For example, if the value of the occasion index starts from 0, the occasion index of the 1st occasion is 0. Alternatively, the terminal assumes that a candidate occasion set index corresponding to the i-th candidate occasion set within one reception time window of the target low-power signal or within one sending period is i or i-1.

Optionally, the terminal may alternatively determine, based on the index of each candidate occasion, a candidate occasion set to which each candidate occasion belongs.

For one group of occasions to which one occasion set i corresponds, the relationship between the occasion index of each occasion and the occasion set index i is predefined or may be configured by the network-side device. Therefore, the UE can obtain, based on the occasion index, an occasion set index in which the occasion is located.

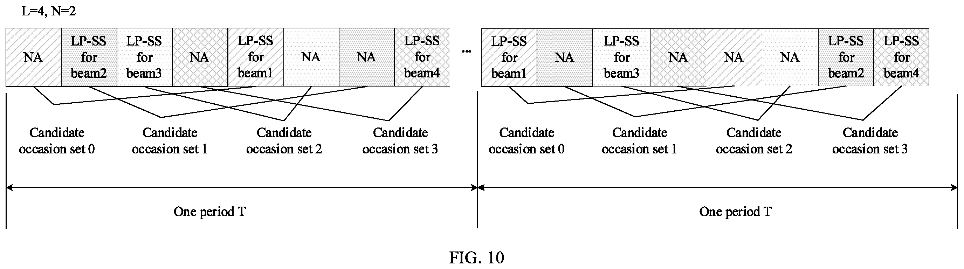

For example, if (i mod L)=j, occasion index i belongs to occasion set j, where i is the occasion index, j is the occasion set index, and L is a total number of the occasion sets, or L is a QCL parameter. For example, L indicates that there may be L different beams, or L is the number of low-power signals sent within one sending period. For example, in FIG. 5 and FIG. 10, L=4, and N=2.

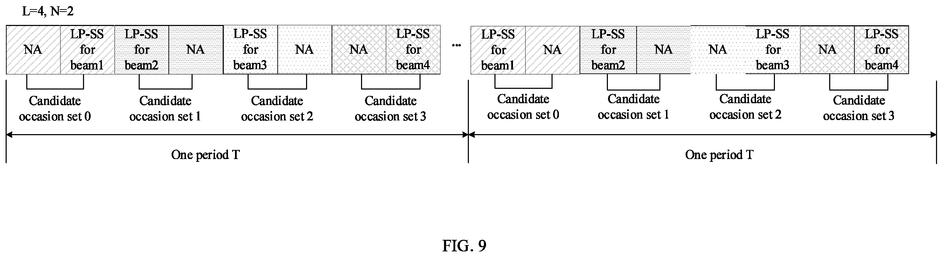

For another example, if floor(i/N)=j, occasion index i belongs to occasion set j, where i is the occasion index, j is the occasion set index, and N is a total number of the occasions in one occasion set. For example, in FIG. 4 and FIG. 9, L=4, and N=2.

In an optional implementation, the terminal can determine, based on a target occasion in which the target low-power signal is detected, the spatial characteristic of each detected target low-power signal in the at least one candidate occasion, where the target occasion is one of the at least one candidate occasion.

For example, the UE can determine the index of the low-power signal according to the occasion index or occasion set index in which the detected low-power signal is located. Alternatively, the index of the low-power signal may alternatively be carried by the low-power signal. For example, the index is determined based on a sequence or payload of the low-power signal. Then, the spatial characteristic of the detected low-power signal is determined based on the index of the low-power signal.

For example, the protocol or the network-side device configures a sending period Tp of the target low-power signal, a time offset Offset1, a reception time window duration within one sending period, a duration of each occasion, and a time interval between the occasions. The UE can calculate locations of the occasions and the number of the occasions within the reception time window based on the time window duration, the duration of each occasion, and the time interval between the occasions.

For another example, the protocol or the network-side device configures the sending period Tp of the target low-power signal, the time offset Offset1, the duration of each occasion, the time interval between the occasions, the number of the occasions within one period, or the number of the occasion sets in one period and the number of the occasions in the set. The UE can calculate the locations of the occasions, the locations of the occasion sets, and the number of the occasions.

For another example, the protocol or the network-side device configures the sending period Tp of the target low-power signal, the time offset Offset 1, the duration of each occasion, the time interval between the occasions, the time interval between the occasion sets, and the reception time window duration, where one reception time window corresponds to one occasion set. The UE can calculate the locations of the occasions, the locations of the occasion sets, and the number of the occasions. For example, the network-side device configures Tp, offset1, a duration To of each occasion, an interval offset_i between the occasions, intervals Offset_j1 and Offset_j2 between the occasion sets, and reception time window durations Tset1, Tset2, and Tset3 of the occasion sets. The UE can calculate a location of a first reception time window within each sending period based on the Tp and offset1, and calculate locations of the second and third time windows based on the Offset_j1 and Offset_j2. The locations and the number of the occasions within each time window are calculated based on the Tset1, the Tset2, the Tset3, the duration of each occasion, and the time interval between the occasions.

For another example, the protocol or the network-side device configures the sending period Tp of the target low-power signal, the time offset Offset1, the duration of each occasion, the time interval between the occasions, the time interval between the occasion sets, and the number of the occasions in each occasion set. The UE can calculate the locations of the occasions, the locations of the occasion sets, and the number of the occasions.

In this embodiment of this application, when determining the spatial characteristic of each detected target low-power signal in the at least one candidate occasion, for at least two of the target low-power signals of a same type such as two LP-WUSs detected on different candidate occasions, the terminal can determine spatial characteristics of the at least two detected target low-power signals according to the following implementation manners 1 to 5.

Implementation manner 1: The terminal determines that the target low-power signals corresponding to target occasions in one candidate occasion set within one target time period satisfy a same spatial characteristic, and that the target low-power signals corresponding to target occasions in one candidate occasion set across target time periods satisfy a same spatial characteristic. That is, the UE may assume that within one target time period of the target low-power signals, the target low-power signals corresponding to the occasions in a same occasion set or in the occasions satisfy a same characteristic, and the UE may assume that the low-power signals corresponding to a same occasion set or in a same occasion set across periods of the target low-power signals satisfy a same characteristic.

For example, there are multiple occasions within one signal period Tp of the low-power signal as well as serial numbers of the occasions within each period Tp or serial numbers in each occasion set within one signal period Tp. For example, a total number O of the occasions within one signal period Tp is equal to 8, with the serial numbers being 0 to O-1 (0 to 7). Assuming that there are L=4 occasion sets within one signal period Tp, the serial numbers of the occasion sets are 0 to L-1 (0 to 3). One occasion set contains N=2 occasions, so that according to manner A, if (i mod L)=j, occasion index i belongs to occasion set j, for example, as shown in FIG. 5. Alternatively, according to manner B, if floor(i/N)=j, occasion index i belongs to occasion set j, as shown in FIG. 4. If the occasions within each signal period correspond to a same occasion set index, these occasions are considered to correspond to a same occasion set.

Further, the UE can calculate an index of a candidate low-power signal or an index of a low-power signal based on an occasion index or an occasion set index. For example, the index of the candidate low-power signal or the index of the low-power signal is the index of the occasion set, that is, a candidate LP-SS/LP-WUS index of an LP-SS or LP-WUS sent in occasion set i is i, or the LP-SS/LP-WUS index is i. For another example, the index of the candidate low-power signal or the index of the low-power signal is determined based on the occasion index, and according to manner A, if (i mod L)=j, or if floor(i/N)=j, the candidate LP-SS/LP-WUS index of the LP-SS or LP-WUS sent in occasion index i is j.

According to the above implementation manner 1, the low-power signals sent by the network-side device in any one of the occasions corresponding to a same occasion set within one or more target time periods need to satisfy a same characteristic. Correspondingly, the UE may assume that the low-power signals in any one of the occasions corresponding to a same occasion set within a same or different target time periods satisfy a same characteristic. As shown in FIG. 9 and FIG. 10, the target time period T may be a signal period of an LP-SS, L=4, and N=2. The LP-SSs sent by the network-side device in occasion set i (i=0, 1, 2, or 3) within any period need to satisfy a same spatial characteristic, for example, using a same beam. The UE may assume that the LP-SSs sent in occasion i within multiple periods satisfy QCL type-D and/or QCL type-A.

Implementation manner 2: The terminal determines that the target low-power signals corresponding to target occasions in one candidate occasion set within one target time period satisfy a same spatial characteristic, and that the target low-power signals corresponding to target occasions in one candidate occasion set across target time periods do not satisfy a same spatial characteristic.

In this implementation manner, the low-power signals sent by the network-side device in any one of the occasions corresponding to a same occasion set within one target time period need to satisfy a same characteristic. Across target time periods, the low-power signals sent in a same occasion set may not satisfy a same characteristic.

Correspondingly, the UE may assume that the low-power signals in any one of the occasions corresponding to a same occasion set within a same target time period satisfy a same characteristic, and that the low-power signals in any one of the occasions corresponding to a same occasion set across target time periods do not satisfy a same characteristic.

As compared with implementation manner 1, in implementation manner 2, the network-side device has greater scheduling flexibility, but may increase the power consumption of the UE.

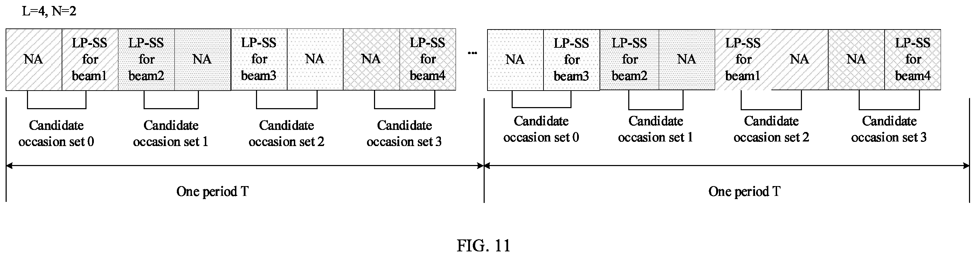

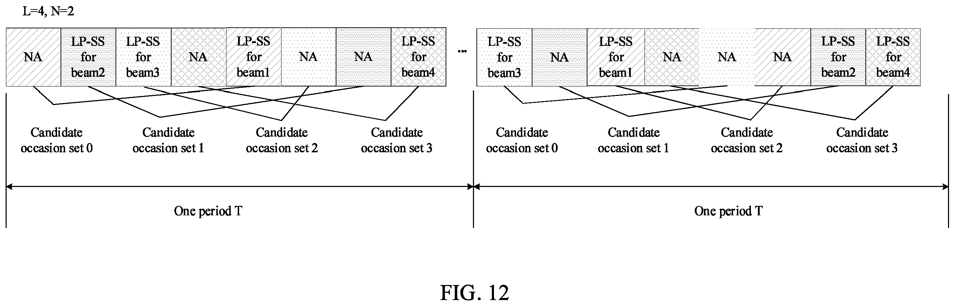

As shown in FIG. 11 and FIG. 12, the target time period T is a signal period of an LP-SS, L=4, and N=2. The LP-SSs sent by the network-side device in occasion set i (i=0, 1, 2, or 3) within one target time period need to satisfy a same spatial characteristic, for example, using a same beam. The UE may assume that the LP-SSs sent in occasion i within multiple target time periods do not satisfy QCL type-D and/or QCL type-A. For example, for occasion set 0 within a first target time period and occasion set 0 within a second target time period, the network-side device uses different beams for sending, and the UE cannot assume that the LP-SSs of occasion set 0 within the two target time periods satisfy a same characteristic.

Implementation manner 3. The terminal determines that the target low-power signals corresponding to target occasions within a same or different target time periods do not satisfy a same spatial characteristic.

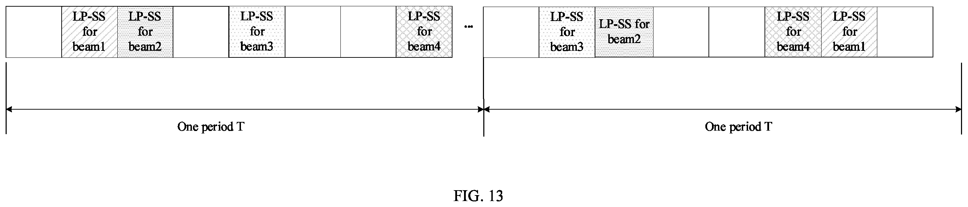

In this implementation manner, the low-power signals sent by the network-side device in any two occasions do not need to satisfy a same characteristic. Correspondingly, the UE assumes that the low-power signals sent in any two occasions do not satisfy a same characteristic, as shown in FIG. 13.

Implementation manner 4. The terminal determines that the target low-power signals with a same index within a same or different target time periods satisfy a same spatial characteristic, where the index of the target low-power signal is based on at least one of the following: an index of the target occasion, an index of a candidate occasion set to which the target occasion belongs, and information carried in the target low-power signal.

In this implementation manner, spatial characteristics of the target low-power signals of a same type are determined based on the indices of the target low-power signals. The UE may assume that the low-power signals corresponding to the index of a same candidate low-power signal or the index of a same low-power signal within a same or different target time periods satisfy a same characteristic. The index of the candidate low-power signal or the index of the low-power signal may be determined based on an occasion index or an occasion set index, or determined based on an index configured in resource configuration of the low-power signal, or determined based on an index carried by the low-power signal, for example, being indicated by different sequences or payloads.

Implementation manner 5. The terminal determines that the target low-power signals with a same index within one target time period satisfy a same spatial characteristic, and that the target low-power signals with a same index across target time periods do not satisfy a same characteristic, where the index of the target low-power signal is based on at least one of the following: an index of the target occasion, an index of a candidate occasion set to which the target occasion belongs, and information carried in the target low-power signal.

In this implementation manner, spatial characteristics of multiple target low-power signals of a same type are determined based on the indices of the target low-power signals. For example, the UE may assume that the low-power signals corresponding to the index of a same candidate low-power signal or the index of a same low-power signal within a same target time period satisfy a same characteristic, and that the low-power signals corresponding to the index of a same candidate low-power signal or the index of a same low-power signal across target time periods do not satisfy a same characteristic.

Optionally, the UE may assume that the network-side device sends the target low-power signal in only one occasion of each occasion set within one target time period.

Optionally, the UE may assume that the network-side device sends the target low-power signal in only one occasion in each occasion set within each target time period. Alternatively, the UE may assume that the network-side device sends the low-power signal in only one occasion in X occasion sets within each target time period, where the value of X may vary within each target time period.

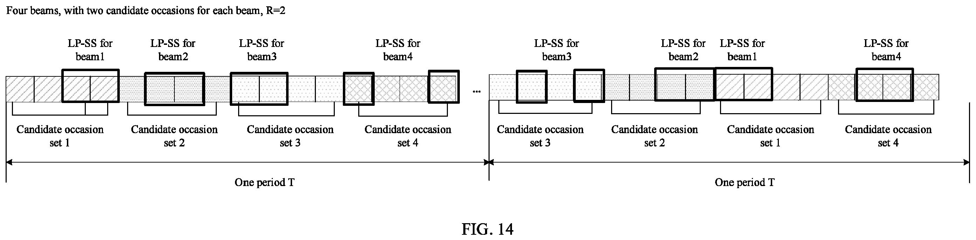

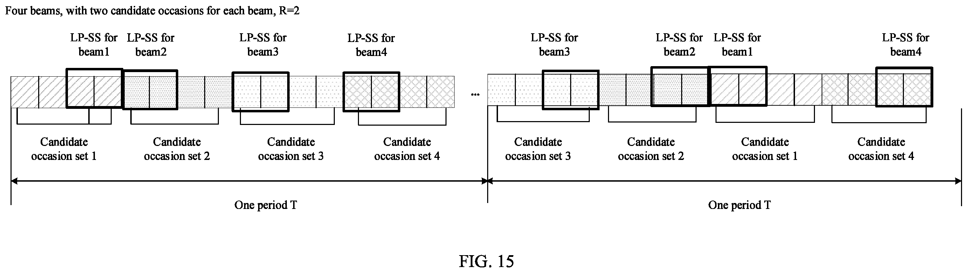

If the target low-power signal is sent based on repetition (repetition number=R, where R>1), in an implementation, the R repetitions of one low-power signal are performed in R occasions in one occasion set. Optionally, N is an integer multiple of R. The R occasions corresponding to the R repetitions may be any R occasions among the N occasions, as shown in FIG. 14. Alternatively, the R occasions are determined based on a predefined rule, for example, being mapped to R adjacent occasions, where the 1st occasion needs to satisfy occasion index (i mod R)=0, as shown in FIG. 15.

In this embodiment of this application, when determining the spatial characteristic of each detected target low-power signal in the at least one candidate occasion, for at least two target low-power signals of different types detected within a same target time period or different target time periods, such as an LP-WUS and an LP-SS detected on different candidate occasions or an LP-WUS and an SSB detected on different candidate occasions, the terminal can determine spatial characteristics of the at least two detected target low-power signals according to the following implementation manners 1 to 6.

Implementation manner 1: The terminal determines that the first low-power signal and the second low-power signal whose corresponding target occasions are in a same candidate occasion set satisfy a same spatial characteristic.

For example, the UE may assume that an LP-SS and an LP-WUS corresponding to a same occasion set within one or more target time periods satisfy a same characteristic.

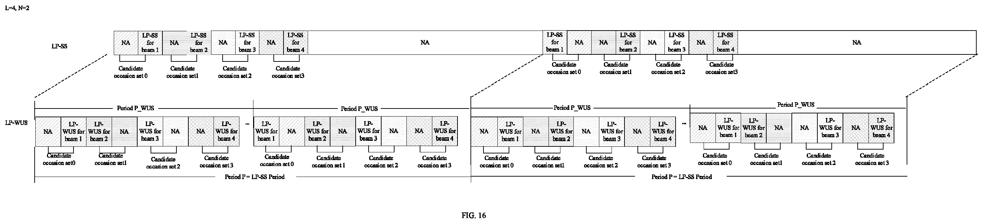

For example, the LP-WUS sent by the network-side device in a same occasion set within one or more target time periods needs to satisfy a same characteristic, and the LP-SSs sent by the network-side device in a same occasion set within one or more target time periods need to satisfy a same characteristic. In addition, the characteristics of the LP-SS and the LP-WUS corresponding to one occasion set are the same. As shown in FIG. 16, the target time period is an LP-SS period.

For another example, the UE may assume that one SSB and one LP-WUS corresponding to a same occasion set satisfy a same characteristic.

Implementation manner 2. The terminal determines that the first low-power signal whose corresponding target occasion is in a first candidate occasion set and the second low-power signal whose corresponding target occasion is in a second candidate occasion set satisfy a same spatial characteristic, where an index of the first candidate occasion set and an index of the second candidate occasion set satisfy a first predetermined relationship.

In this implementation manner, in a case that the number L1 of the occasion sets within one signal period of the LP-SS and the number L2 of the occasion sets within one signal period of the LP-WUS are not equal, if occasion set i of the LP-SS and occasion set j of the LP-WUS satisfy the first predetermined relationship, the UE may assume that the LP-SS corresponding to occasion set i of the LP-SS and the LP-WUS corresponding to occasion set j of the LP-WUS within one or more specific periods satisfy a same characteristic. For example, if L1/L2=A, the first predetermined relationship may be: i and j satisfy floor(j/A)=i.

Alternatively, the UE may assume that if occasion set i and occasion set j satisfy a second predetermined relationship, one SSB corresponding to occasion set i and one LP-WUS corresponding to occasion set j satisfy a same characteristic. For example, the second predetermined relationship is (i mod M)=j, or (j mod M)=i, where M is a ratio of the number of SSB occasion sets to the number of LP-WUS occasion sets, or is configured by the network-side device. For another example, the specific relationship is floor(i/M)=j, or floor(j/M)=i.

Implementation manner 3. The terminal determines that the first low-power signal and the second low-power signal whose corresponding target occasions satisfy a second predetermined relationship satisfy a same characteristic.

For example, the UE may assume that an LP-SS corresponding to occasion index i of the LP-SS and an LP-WUS corresponding to occasion index j of the LP-WUS within one or more target time periods satisfy a same characteristic, where i and j satisfy the second predetermined relationship. For example, the second predetermined relationship is (i mod L1)=(j mod L2), where L1 is the number of the LP-SSs within one LP-SS period, and L2 is the number of the LP-WUSs within one LP-WUS period. For another example, the second predetermined relationship is floor(i/N1)=floor(j/N2), where N1 is the number of occasions for the LP-SS in one occasion set, and N2 is the number of occasions for the LP-WUS in one occasion set.

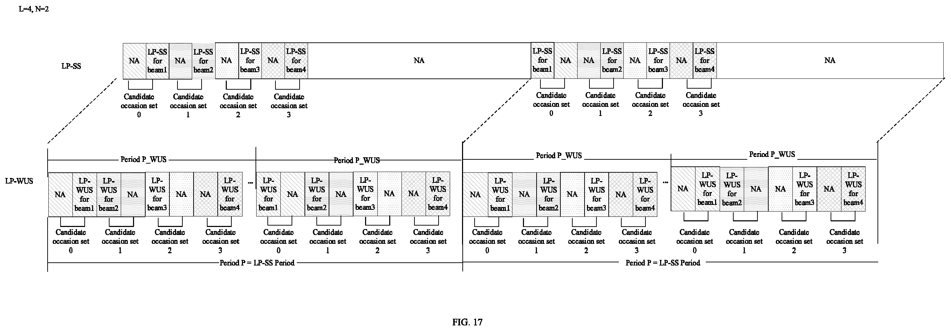

For another example, the UE may assume that an LP-SS corresponding to occasion index i of the LP-SS and an LP-WUS corresponding to occasion index j of the LP-WUS within one or more target time periods satisfy a same characteristic, where i and j satisfy the second predetermined relationship, and the LP-SS and LP-WUS across target time periods do not satisfy a same characteristic, as shown in FIG. 17.

For another example, the UE may assume that if occasion set i and occasion set j satisfy the second predetermined relationship, one SSB corresponding to occasion index i and one LP-WUS corresponding to occasion index j satisfy a same characteristic. For example, the second predetermined relationship is (i mod L1)=(j mod L2), where L1 is the number of SSBs, for example, the number of SSBs determined based on *ssb-PositionsInBurst,* or the number of SSBs to be measured for LR configured by the base station; and L2 is the number of LP-WUSs within one LP-WUS period. For another example, the second predetermined relationship is floor(i/N1)=floor(j/N2), where N1 is the number of occasions for the SSB in one occasion set, and N2 is the number of occasions for the LP-WUS in one occasion set.

Implementation manner 4. The terminal determines that the first low-power signal and the second low-power signal with a same index satisfy a same spatial characteristic.

For example, the UE may assume that an LP-SS and an LP-WUS corresponding to a same candidate LP-SS and LP-WUS index or with a same LP-SS and LP-WUS index within a same or different target time periods satisfy a same characteristic.

Alternatively, the UE can also assume that the LP-SS and LP-WUS corresponding to a same candidate LP-SS and LP-WUS index or with a same LP-SS and LP-WUS index within a same specific period satisfy a same characteristic, and that the LP-SS and LP-WUS across periods do not satisfy a same characteristic.

The candidate LP-SS and LP-WUS index or the LP-SS and LP-WUS index may be determined based on a corresponding occasion index or occasion set index, or determined based on an index configured in a resource configuration of the LP-SS and LP-WUS, or determined based on an index carried by the LP-SS and LP-WUS, for example, being indicated by different sequences or payloads.

For example, the UE may assume that one SSB and one LP-WUS corresponding to a same index satisfy a same characteristic.

Implementation manner 5. The terminal determines that the first low-power signal and the second low-power signal whose indices satisfy a third predetermined relationship satisfy a same spatial characteristic.

For example, if SSB index i or candidate SSB index i and LP-WUS occasion set j or LP-WUS occasion index j satisfy the third predetermined relationship, the UE may assume that the SSB and LP-WUS within one or more target time periods satisfy a same characteristic.

For example, the third predetermined relationship is (i mod M)=j, or (j mod M)=i, where M is predefined, or configured by the base station. For another example, the third predetermined relationship is floor(i/M)=j, or floor(j/M)=i.

Implementation manner 6. The terminal determines that a second low-power signal serving as a reference signal of a first low-power signal and the first low-power signal satisfy a same spatial characteristic.

For example, if one SSB is configured as a reference signal of a characteristic of an LP-WUS, the UE may assume that the SSB and the LP-WUS satisfy a same characteristic.

For another example, if one LP-SS is configured as a reference signal of a characteristic of an LP-WUS, the UE may assume that the LP-SS and the LP-WUS satisfy a same characteristic.

In one or more optional implementations, the method may further include: the terminal combines multiple target low-power signals with a same spatial characteristic. For example, the terminal may combine target low-power signals of a same type that have a same spatial characteristic, to obtain a measurement result of one beam. Alternatively, the terminal may alternatively combine target low-power signals of different types that have a same spatial characteristic, for example, may combine measurement results of an LP-SS and an LP-WUS with a same spatial characteristic, or combine measurement results of an LP-SS and an SSB with a same spatial characteristic that are measured based on LP-WUR.

Through the above technical solutions provided in the embodiments of this application, the network-side device can be supported in sending an LP-SS/LP-WUS by using multiple beams, which implements beam sweeping and can also provide certain scheduling flexibility, thereby reducing the impact on sending of other NR signals. In addition, the UE can be supported in receiving an LP-WUS based on synchronization information and beam information of an LP-SS, improving the reception performance and reducing power consumption.

Based on a same technical concept, an embodiment of this application further provides a low-power signal sending method.

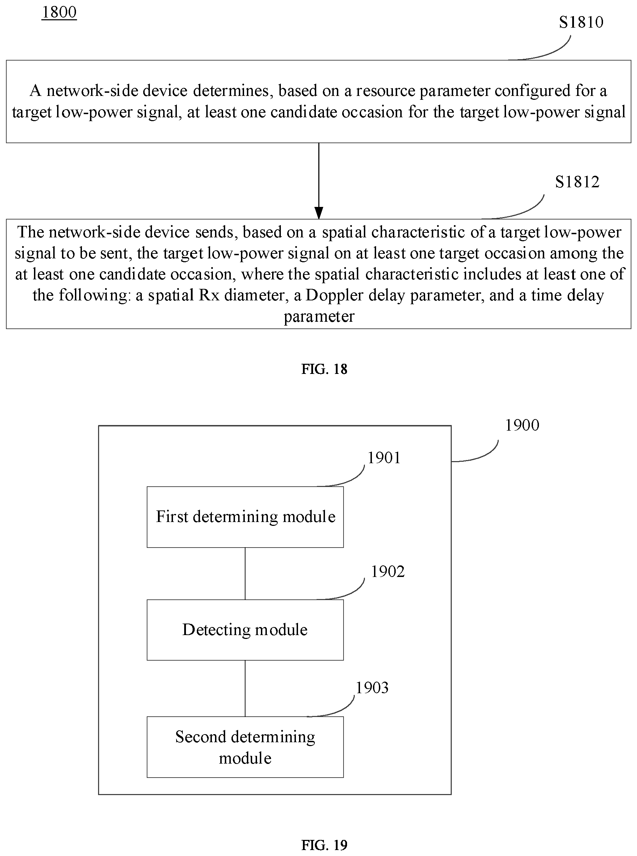

FIG. 18 shows a schematic flowchart of a low-power signal sending method according to this embodiment of this application. The method may be performed by a network-side device. In other words, the method may be performed by software or hardware installed on a network-side device. It should be noted that the following embodiments are used to only describe the operations of the network-side device, and for other unmentioned matters, reference may be made to the relevant descriptions about the method 300 above.

As shown in FIG. 18, the method may include the following steps.

S1810. The network-side device determines, based on a resource parameter configured for a target low-power signal, at least one candidate occasion for the target low-power signal.

The resource parameter is the same as the resource parameter in the method 300, and for details, reference is made to the relevant descriptions in the method 300, which are not described herein again.

S1812. The network-side device sends, based on a spatial characteristic of a target low-power signal to be sent, the target low-power signal on at least one target occasion among the at least one candidate occasion, where the spatial characteristic includes at least one of the following: a spatial Rx parameter, a Doppler delay parameter, and a time delay parameter.

In an optional implementation, the resource parameter may include at least one of the following: a sending period of the target low-power signal, a reception time window duration of the target low-power signal, candidate occasion information within the reception time window of the target low-power signal, candidate occasion information within one sending period, spatial characteristics corresponding to each candidate occasion, and a repetition number of the target low-power signal.

In an optional implementation, the candidate occasion information may include at least one of the following: a time duration of one candidate occasion, a time interval between two adjacent candidate occasions, a time interval between two adjacent candidate occasion sets, the number of candidate occasions, the number of candidate occasion sets, and the number of candidate occasions in one candidate occasion set.

In an optional implementation, the spatial characteristics corresponding to each candidate occasion may include at least one of the following (1) to (6).
(1) Within a same target time period, target low-power signals corresponding to candidate occasions in a same candidate occasion set have a same spatial characteristic.
(2) Within a same target time period, target low-power signals corresponding to candidate occasions whose candidate occasion locations or candidate occasion indices satisfy a predefined relationship have a same spatial characteristic.
(3) Within a same target time period, target low-power signals corresponding to candidate occasions have a same spatial characteristic.
(4) Across target time periods, target low-power signals corresponding to candidate occasions in a same candidate occasion set have a same spatial characteristic.
(5) Across target time periods, target low-power signals corresponding to candidate occasions in a same candidate occasion set do not have a same spatial characteristic.
(6) Across target time periods, in two candidate occasion sets that satisfy a first predetermined relationship in different candidate occasion sets, target low-power signals corresponding to candidate occasions have a same spatial characteristic.

In an optional implementation, the resource parameter includes at least one set of resource parameters, and within one target time period, the spatial characteristics corresponding to each candidate occasion satisfy one of the following (1) to (3).
(1) Target low-power signals corresponding to candidate occasions configured in one set of resource parameters have a same signal characteristic.
(2) In the candidate occasions configured in one set of resource parameters, target low-power signals corresponding to candidate occasions whose candidate occasion locations or candidate occasion indices satisfy a predefined relationship have a same spatial characteristic.
(3) For multiple candidate occasion sets configured in one set of resource parameters, target low-power signals corresponding to candidate occasions in a same candidate occasion set have a same signal characteristic.

In an optional implementation, the target low-power signal includes at least one of a first low-power signal and a second low-power signal.

In an optional implementation, the resource parameter includes: a resource parameter corresponding to the first low-power signal and a resource parameter corresponding to the second low-power signal.

In an optional implementation, the resource parameter includes: a time resource parameter corresponding to the first low-power signal and a time offset parameter of the second low-power signal relative to the first low-power signal.

In an optional implementation, the time offset parameter is a time offset between the first candidate occasion for the first low-power signal and the first candidate occasion for the second low-power signal within one target time period.

In an optional implementation, the time offset parameter is a time offset between the 1st first candidate occasion for the first low-power signal and the 1st second candidate occasion for the second low-power signal that correspond to a same characteristic within one target time period.

In an optional implementation, the time offset parameter is provided in plurality, where each time offset parameter corresponds to one group of low-power signals satisfying a same characteristic; or there is one time offset parameter, where the one time offset parameter corresponds to each group of low-power signals satisfying a same characteristic.

In an optional implementation, that the network-side device sends, based on a spatial characteristic of a target low-power signal to be sent, the target low-power signal on at least one target occasion among the at least one candidate occasion may include: for at least two of the target low-power signals of a same type, the network-side device sends the target low-power signal based on one of the following (1) to (7).
(1) Within a same target time period, the network-side device sends the target low-power signal on target occasions in a same candidate occasion set by using a same spatial characteristic; and across target time periods, the network-side device sends the target low-power signal on target occasions in a same candidate occasion set by using a same spatial characteristic.
(2) Within a same target time period, the network-side device sends the target low-power signal on target occasions in a same candidate occasion set by using a same spatial characteristic; and across target time periods, the network-side device sends the target low-power signal on target occasions in a same candidate occasion set by using different spatial characteristics.
(3) Within a same target time period, the network-side device sends the target low-power signal on target occasions by using different spatial characteristics.
(4) Across target time periods, the network-side device sends the target low-power signal on target occasions by using different spatial characteristics.
(5) Within a same target time period, the network-side device sends target low-power signals with a same index by using a same spatial characteristic, to satisfy a same spatial characteristic, where the index of the target low-power signal is based on at least one of the following: an index of the target occasion, an index of a candidate occasion set to which the target occasion belongs, and information carried in the target low-power signal.
(6) Across target time periods, the network-side device sends target low-power signals with a same index by using a same spatial characteristic, where the index of the target low-power signal is based on at least one of the following: an index of the target occasion, an index of a candidate occasion set to which the target occasion belongs, and information carried in the target low-power signal.
(7) Within a same target time period, the network-side device sends target low-power signals with a same index by using a same spatial characteristic; and across target time periods, the network-side device sends target low-power signals with a same index by using different spatial characteristics; where the index of the target low-power signal is based on at least one of the following: an index of the target occasion, an index of a candidate occasion set to which the target occasion belongs, and information carried in the target low-power signal.

In an optional implementation, that the network-side device sends, based on a spatial characteristic of a target low-power signal to be sent, the target low-power signal on at least one target occasion among the at least one candidate occasion includes: for two of the target low-power signals of different types, the network-side device sends the target low-power signal within one target time period or different target time periods based on one of the following (1) to (6).
(1) The network-side device sends a first low-power signal and a second low-power signal whose target occasions are in a same candidate occasion set by using a same spatial characteristic, to satisfy a same spatial characteristic.
(2) The network-side device sends a first low-power signal whose target occasion is in a first candidate occasion set and a second low-power signal whose corresponding target occasion is in a second candidate occasion set by using a same spatial characteristic, where an index of the first candidate occasion set and an index of the second candidate occasion set satisfy a first predetermined relationship.
(3) The network-side device sends a first low-power signal and a second low-power signal whose target occasions satisfy a second predetermined relationship by using a same spatial characteristic.
(4) The network-side device sends a first low-power signal and a second low-power signal with a same index by using a same spatial characteristic, to satisfy a same spatial characteristic.
(5) The network-side device sends a first low-power signal and a second low-power signal satisfying a third predetermined relationship by using a same spatial characteristic, to satisfy a same spatial characteristic.
(6) The network-side device sends the first low-power signal and the second low-power signal by using a same spatial characteristic, where the second low-power signal is a reference signal of the first low-power signal.

Optionally, the first low-power signal and the second low-power signal are target low-power signals of different types.

Optionally, the index of the first low-power signal may be based on at least one of the following: an index of a target occasion corresponding to the first low-power signal, an index of a candidate occasion set to which the target occasion corresponding to the first low-power signal belongs, and information carried in the first low-power signal.

Optionally, the index of the second low-power signal is based on at least one of the following: an index of a target occasion corresponding to the second low-power signal, an index of a candidate occasion set to which the target occasion corresponding to the second low-power signal belongs, and information carried in the second low-power signal.

Through the above technical solutions provided in the embodiments of this application, the network-side device can determine, based on the resource parameter configured by the network-side device for the target low-power signal or based on the resource parameter configured by the protocol, at least one candidate occasion for the target low-power signal, and then send, based on a spatial characteristic of a target low-power signal to be sent, the target low-power signal on at least one target occasion among the at least one candidate occasion, where the spatial characteristic includes at least one of the following: a spatial Rx parameter, a Doppler delay parameter, and a time delay parameter. Thus, the network-side device can send the low-power signal by using multiple beams.

The low-power signal receiving method provided in this embodiment of this application may be performed by a low-power signal receiving apparatus. In this embodiment of this application, an example in which a low-power signal receiving apparatus performs the low-power signal receiving method is used to illustrate the low-power signal receiving apparatus provided in this embodiment of this application.

FIG. 19 is a low-power signal receiving apparatus according to an embodiment of this application. As shown in FIG. 19, the apparatus 1900 mainly includes: a first determining module 1901, a detecting module 1902, and a second determining module 1902.

In this embodiment of this application, the first determining module 1901 is configured to determine, based on a resource parameter configured for a target low-power signal, at least one candidate occasion for the target low-power signal; the detecting module 1902 is configured to detect, in the at least one candidate occasion, the target low-power signal sent by a network-side device; and the second determining module 1903 is configured to determine a spatial characteristic of each detected target low-power signal based on the detected target low-power signal, where the spatial characteristic includes at least one of the following: a spatial Rx parameter, a Doppler delay parameter, and a time delay parameter.

In an implementation, the resource parameter includes at least one of the following:
a sending period of a target low-power signal;
a reception time window duration of a target low-power signal;
candidate occasion information within a reception time window of a target low-power signal;
candidate occasion information within one sending period;
spatial characteristics corresponding to each candidate occasion; and
a repetition number of a target low-power signal.

In an implementation, the candidate occasion information includes at least one of the following:
a time duration of one candidate occasion;
a time interval between two adjacent candidate occasions;
a time interval between two adjacent candidate occasion sets;
the number of candidate occasions;
the number of candidate occasion sets; and
the number of candidate occasions in one candidate occasion set.

In an implementation, the spatial characteristics corresponding to each candidate occasion include at least one of the following:
within a same target time period, target low-power signals corresponding to candidate occasions in a same candidate occasion set have a same spatial characteristic;
within a same target time period, target low-power signals corresponding to candidate occasions in a same candidate occasion set have different spatial characteristics;
within a same target time period, target low-power signals corresponding to candidate occasions whose candidate occasion locations or candidate occasion indices satisfy a predefined relationship have a same spatial characteristic;
within a same target time period, target low-power signals corresponding to candidate occasions have a same spatial characteristic;
across target time periods, target low-power signals corresponding to candidate occasions in a same candidate occasion set have a same spatial characteristic;
across target time periods, target low-power signals corresponding to candidate occasions in a same candidate occasion set do not have a same spatial characteristic; and
across target time periods, in two candidate occasion sets that satisfy a first predetermined relationship in different candidate occasion sets, target low-power signals corresponding to candidate occasions have a same spatial characteristic.

In an implementation, the resource parameter includes at least one set of resource parameters, and within one target time period, the spatial characteristics corresponding to each candidate occasion satisfy one of the following:
target low-power signals corresponding to candidate occasions configured in one set of resource parameters have a same signal characteristic;
for candidate occasions configured in one set of resource parameters, target low-power signals corresponding to candidate occasions whose candidate occasion locations or candidate occasion indices satisfy a predefined relationship have a same spatial characteristic; and
for multiple candidate occasion sets configured in one set of resource parameters, target low-power signals corresponding to candidate occasions in a same candidate occasion set have a same signal characteristic.

In an implementation, the target low-power signal includes at least one of the following: a first low-power signal and a second low-power signal.

In an implementation, the determining, based on a resource parameter configured for a target low-power signal, at least one candidate occasion for the target low-power signal includes:
determining, based on resource parameters configured for the first low-power signal and the second low-power signal respectively, at least one candidate occasion for the first low-power signal and at least one candidate occasion for the second low-power signal.

In an implementation, the determining, based on a resource parameter configured for a target low-power signal, at least one candidate occasion for the target low-power signal includes:
obtaining, by a terminal, a time resource parameter configured for the first low-power signal and a time offset parameter of the second low-power signal relative to the first low-power signal; and
determining, by the terminal, time resource information of at least one first candidate occasion for the first low-power signal based on the time resource parameter configured for the first low-power signal, and determining time resource information of at least one second candidate occasion for the second low-power signal based on the time resource information of the at least one first candidate occasion for the first low-power signal and the time offset parameter.

In an implementation, the time offset parameter is a time offset between the first candidate occasion for the first low-power signal and the first candidate occasion for the second low-power signal within one target time period; and the determining, time resource information of at least one second candidate occasion for the second low-power signal based on the time resource information of the at least one first candidate occasion for the first low-power signal and the time offset parameter includes:
determining, based on time resource information of the 1st first candidate occasion for the first low-power signal, a time location of the 1st second candidate occasion for the second low-power signal; and
determining, based on the time location of the 1st second candidate occasion for the second low-power signal, a time location of another second candidate occasion for the second low-power signal within the target time period, where the another second candidate occasion is a second candidate occasion other than the 1st second candidate occasion for the second low-power signal within the target time period.

In an implementation, the time offset parameter is a time offset between the 1st first candidate occasion for the first low-power signal and the 1st second candidate occasion for the second low-power signal that correspond to a same characteristic within one target time period; and the determining, time resource information of at least one second candidate occasion for the second low-power signal based on the time resource information of the at least one first candidate occasion for the first low-power signal and the time offset parameter includes:
determining, based on the time resource information of the 1st first candidate occasion for the first low-power signal, a time location of the 1st second candidate occasion for the second low-power signal; and
determining, based on the time location of the 1st second candidate occasion for the second low-power signal, a time location of another second candidate occasion for the second low-power signal corresponding to a same characteristic within the target time period, where the another second candidate occasion is a second candidate occasion other than the 1st second candidate occasion for the second low-power signal within the target time period.

In an implementation, the same characteristic includes a same spatial characteristic.

In an implementation, the time offset parameter is provided in plurality, where each time offset parameter corresponds to one group of low-power signals satisfying a same characteristic; or
there is one time offset parameter, where the one time offset parameter corresponds to each group of low-power signals satisfying a same characteristic.

In an implementation, the second determining module 1903 is further configured to determine, based on the at least one candidate occasion for the target low-power signal, an index of each candidate occasion or each candidate occasion set of the target low-power signal within one time window, where the time window includes one of the following: a reception time window of the target low-power signal and a sending period of the target low-power signal.

In an implementation, the second determining module 1903 is further configured to determine, based on the index of each candidate occasion, a candidate occasion set to which the candidate occasion belongs.

In an implementation, the determining a spatial characteristic of each detected target low-power signal based on the detected target low-power signal includes:
determining, based on a target occasion in which the target low-power signal is detected, the spatial characteristic of each detected target low-power signal in the at least one candidate occasion, where the target occasion is one of the at least one candidate occasion.

In an implementation, the determining, based on a target occasion in which the target low-power signal is detected, the spatial characteristic of each detected target low-power signal in the at least one candidate occasion includes:
for at least two of the target low-power signals of a same type, determining spatial characteristics of at least two detected target low-power signals based on one of the following:
determining that target low-power signals corresponding to target occasions in one candidate occasion set within one target time period satisfy a same spatial characteristic, and that target low-power signals corresponding to target occasions in one candidate occasion set across target time periods satisfy a same spatial characteristic;
determining that target low-power signals corresponding to target occasions in one candidate occasion set within one target time period satisfy a same spatial characteristic, and that target low-power signals corresponding to target occasions in one candidate occasion set across target time periods do not satisfy a same spatial characteristic;
determining that target low-power signals corresponding to target occasions within a same target time period do not satisfy a same spatial characteristic;
determining that target low-power signals corresponding to target occasions across target time periods do not satisfy a same spatial characteristic;
determining that target low-power signals with a same index within a same target time period satisfy a same spatial characteristic, where the index of the target low-power signal is based on at least one of the following: an index of the target occasion, an index of a candidate occasion set to which the target occasion belongs, and information carried in the target low-power signal;
determining that target low-power signals with a same index across target time periods satisfy a same spatial characteristic, where the index of the target low-power signal is based on at least one of the following: an index of the target occasion, an index of a candidate occasion set to which the target occasion belongs, and information carried in the target low-power signal; and
determining that target low-power signals with a same index within one target time period satisfy a same spatial characteristic, and that target low-power signals with a same index across target time periods do not satisfy a same characteristic, where the index of the target low-power signal is based on at least one of the following: an index of the target occasion, an index of a candidate occasion set to which the target occasion belongs, and information carried in the target low-power signal.

In an implementation, the determining, based on a target occasion in which the target low-power signal is detected, the spatial characteristic of each detected target low-power signal in the at least one candidate occasion includes:
for two of the target low-power signals of different types, determining, based on one of the following, spatial characteristics of at least two target low-power signals detected within one target time period or different target time periods:
determining that a first low-power signal and a second low-power signal whose corresponding target occasions are in a same candidate occasion set satisfy a same spatial characteristic;
determining that a first low-power signal whose corresponding target occasion is in a first candidate occasion set and a second low-power signal whose corresponding target occasion is in a second candidate occasion set satisfy a same spatial characteristic, where an index of the first candidate occasion set and an index of the second candidate occasion set satisfy a first predetermined relationship;
determining that a first low-power signal and a second low-power signal whose corresponding target occasions satisfy a second predetermined relationship satisfy a same characteristic;
determining that a first low-power signal and a second low-power signal with a same index satisfy a same spatial characteristic;
determining that a first low-power signal and a second low-power signal whose indices satisfy a third predetermined relationship satisfy a same spatial characteristic; and
determining that a second low-power signal serving as a reference signal of a first low-power signal and the first low-power signal satisfy a same spatial characteristic; where
the first low-power signal and the second low-power signal are target low-power signals of different types;
the index of the first low-power signal is based on at least one of the following: an index of the target occasion corresponding to the first low-power signal, an index of a candidate occasion set to which the target occasion corresponding to the first low-power signal belongs, and information carried in the first low-power signal; and
the index of the second low-power signal is based on at least one of the following: an index of the target occasion corresponding to the second low-power signal, an index of a candidate occasion set to which the target occasion corresponding to the second low-power signal belongs, and information carried in the second low-power signal.

In an implementation, the second determining module 1903 is further configured to combine multiple target low-power signals having a same spatial characteristic.

In an implementation, the target time period includes one of the following:
a sending period of a first low-power signal;
a sending period of a second low-power signal;
a time period configured in the resource parameter; and
a target time period, where the target time period is the least common multiple of a sending period of a first low-power signal and a sending period of a second low-power signal; where
the first low-power signal and the second low-power signal are low-power signals of different types.

The low-power signal receiving apparatus in this embodiment of this application may be an electronic device, for example, an electronic device with an operating system, or a component in an electronic device, such as an integrated circuit or a chip. The electronic device may be a terminal or another device other than the terminal. Exemplarily, the terminal may include but is not limited to the types of the terminal 11 listed above, and the another device may be a server, a network attached storage (Network Attached Storage, NAS), or the like. This is not specifically limited in this embodiment of this application.

The low-power signal receiving apparatus provided in this embodiment of this application can implement the processes implemented by the method embodiment in FIG. 3, with the same technical effects achieved. To avoid repetition, details are not described herein again.

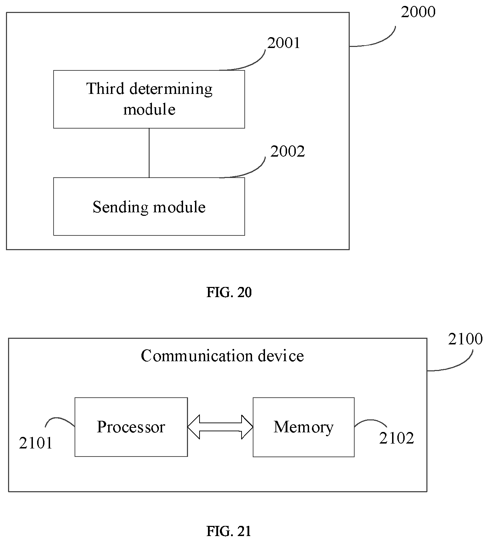

FIG. 20 is a low-power signal sending apparatus according to an embodiment of this application. As shown in FIG. 20, the apparatus 2000 mainly includes: a third determining module 2001 and a sending module 2002.

In this embodiment of this application, the third determining module 2001 is configured to determine, based on a resource parameter configured for a target low-power signal, at least one candidate occasion for the target low-power signal; and the sending module 2002 is configured to send, based on a spatial characteristic of a target low-power signal to be sent, the target low-power signal on at least one target occasion among the at least one candidate occasion, where the spatial characteristic includes at least one of the following: a spatial Rx parameter, a Doppler delay parameter, and a time delay parameter.

In an implementation, the resource parameter includes at least one of the following:
a sending period of a target low-power signal;
a reception time window duration of a target low-power signal;
candidate occasion information within a reception time window of a target low-power signal;
candidate occasion information within one sending period;
spatial characteristics corresponding to each candidate occasion; and
a repetition number of a target low-power signal.

In an implementation, the candidate occasion information includes at least one of the following:
a time duration of one candidate occasion;
a time interval between two adjacent candidate occasions;
a time interval between two adjacent candidate occasion sets;
the number of candidate occasions;
the number of candidate occasion sets; and
the number of candidate occasions in one candidate occasion set.

In an implementation, the spatial characteristics corresponding to each candidate occasion include at least one of the following:
within a same target time period, target low-power signals corresponding to candidate occasions in a same candidate occasion set have a same spatial characteristic;
within a same target time period, target low-power signals corresponding to candidate occasions whose candidate occasion locations or candidate occasion indices satisfy a predefined relationship have a same spatial characteristic;
within a same target time period, target low-power signals corresponding to candidate occasions have a same spatial characteristic;
across target time periods, target low-power signals corresponding to candidate occasions in a same candidate occasion set have a same spatial characteristic;
across target time periods, target low-power signals corresponding to candidate occasions in a same candidate occasion set do not have a same spatial characteristic; and
across target time periods, target low-power signals corresponding to candidate occasions in two candidate occasion sets satisfying a first predetermined relationship among different candidate occasion sets have a same spatial characteristic.

In an implementation, the resource parameter includes at least one set of resource parameters, and within one target time period, the spatial characteristics corresponding to each candidate occasion satisfy one of the following:
target low-power signals corresponding to candidate occasions configured in one set of resource parameters have a same signal characteristic;
for candidate occasions configured in one set of resource parameters, target low-power signals corresponding to candidate occasions whose candidate occasion locations or candidate occasion indices satisfy a predefined relationship have a same spatial characteristic; and
for multiple candidate occasion sets configured in one set of resource parameters, target low-power signals corresponding to candidate occasions in a same candidate occasion set have a same signal characteristic.

In an implementation, the target low-power signal includes at least one of the following: a first low-power signal and a second low-power signal.

In an implementation, the resource parameter includes: a resource parameter corresponding to the first low-power signal and a resource parameter corresponding to the second low-power signal.

In an implementation, the resource parameter includes: a time resource parameter for the first low-power signal and a time offset parameter of the second low-power signal relative to the first low-power signal.

In an implementation, the time offset parameter is a time offset between the first candidate occasion for the first low-power signal and the first candidate occasion for the second low-power signal within one target time period.

In an implementation, the time offset parameter is a time offset between the 1st first candidate occasion for the first low-power signal and the 1st second candidate occasion for the second low-power signal that correspond to a same characteristic within one target time period.

In an implementation, the time offset parameter is provided in plurality, where each time offset parameter corresponds to one group of low-power signals satisfying a same characteristic; or
there is one time offset parameter, where the one time offset parameter corresponds to each group of low-power signals satisfying a same characteristic.

In an implementation, the sending, based on a spatial characteristic of a target low-power signal to be sent, the target low-power signal on at least one target occasion among the at least one candidate occasion includes:
for at least two of the target low-power signals of a same type, sending the target low-power signal based on one of the following:
within a same target time period, sending the target low-power signal on target occasions in a same candidate occasion set by using a same spatial characteristic; and across target time periods, sending the target low-power signal on target occasions in a same candidate occasion set by using a same spatial characteristic;
within a same target time period, sending the target low-power signal on target occasions in a same candidate occasion set by using a same spatial characteristic; and across target time periods, sending the target low-power signal on target occasions in a same candidate occasion set by using different spatial characteristics;
within a same target time period, sending the target low-power signal on target occasions by using different spatial characteristics;
across target time periods, sending the target low-power signal on target occasions by using different spatial characteristics;
within a same target time period, sending target low-power signals with a same index by using a same spatial characteristic, to satisfy a same spatial characteristic, where the index of the target low-power signal is based on at least one of the following: an index of the target occasion, an index of a candidate occasion set to which the target occasion belongs, and information carried in the target low-power signal;
across target time periods, sending target low-power signals with a same index by using a same spatial characteristic, where the index of the target low-power signal is based on at least one of the following: an index of the target occasion, an index of a candidate occasion set to which the target occasion belongs, and information carried in the target low-power signal; and
within a same target time period, sending target low-power signals with a same index by using a same spatial characteristic; and across target time periods, sending target low-power signals with a same index by using different spatial characteristics; where the index of the target low-power signal is based on at least one of the following: an index of the target occasion, an index of a candidate occasion set to which the target occasion belongs, and information carried in the target low-power signal.

In an implementation, the sending, based on a spatial characteristic of a target low-power signal to be sent, the target low-power signal on at least one target occasion among the at least one candidate occasion includes:
for two of the target low-power signals of different types, sending the target low-power signal within one target time period or different target time periods based on one of the following:
sending a first low-power signal and a second low-power signal whose target occasions are in a same candidate occasion set by using a same spatial characteristic, to satisfy a same spatial characteristic;
sending a first low-power signal whose target occasion is in a first candidate occasion set and a second low-power signal whose corresponding target occasion is in a second candidate occasion set by using a same spatial characteristic, where an index of the first candidate occasion set and an index of the second candidate occasion set satisfy a first predetermined relationship;
sending a first low-power signal and a second low-power signal whose target occasions satisfy a second predetermined relationship by using a same spatial characteristic;
sending a first low-power signal and a second low-power signal with a same index by using a same spatial characteristic, to satisfy a same spatial characteristic;
sending a first low-power signal and a second low-power signal satisfying a third predetermined relationship by using a same spatial characteristic, to satisfy a same spatial characteristic; and
sending a first low-power signal and a second low-power signal by using a same spatial characteristic, where the second low-power signal is a reference signal of the first low-power signal; where
the first low-power signal and the second low-power signal are target low-power signals of different types;
the index of the first low-power signal is based on at least one of the following: an index of the target occasion corresponding to the first low-power signal, an index of the candidate occasion set to which the target occasion corresponding to the first low-power signal belongs, and information carried in the first low-power signal; and
the index of the second low-power signal is based on at least one of the following: an index of the target occasion corresponding to the second low-power signal, an index of the candidate occasion set to which the target occasion corresponding to the second low-power signal belongs, and information carried in the second low-power signal.

The low-power signal sending apparatus provided in this embodiment of this application can implement the processes implemented by the method embodiment in FIG. 18, with the same technical effects achieved. To avoid repetition, details are not described herein again.

As shown in FIG. 21, an embodiment of this application further provides a communication device 2100, including a processor 2101 and a memory 2102. A program or instructions executable on the processor 2101 are stored in the memory 2102. For example, if the communication device 2100 is a terminal, when the program or instructions are executed by the processor 2101, the steps of the foregoing low-power signal receiving method embodiment are implemented, with the same technical effects achieved. If the communication device 2100 is a network-side device, when the program or instructions are executed by the processor 2101, the steps of the foregoing low-power signal sending method embodiment are implemented, with the same technical effects achieved. To avoid repetition, details are not described herein again.

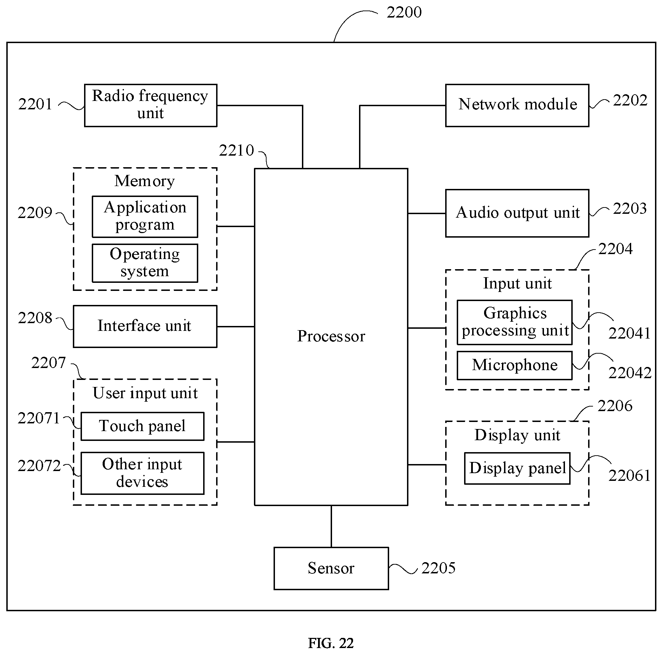

An embodiment of this application further provides a terminal, including a processor and a communication interface. The communication interface and the processor are coupled, and the processor is configured to run a program or instructions to implement the steps of the method embodiment shown in FIG. 3. The terminal embodiment corresponds to the foregoing terminal-side method embodiment, and the implementation processes and implementations of the foregoing method embodiment are all applicable to the terminal embodiment, with the same technical effects achieved. Specifically, FIG. 22 is a schematic diagram of a hardware structure of a terminal implementing an embodiment of this application.

The terminal 2200 includes but is not limited to: at least some components of a radio frequency unit 2201, a network module 2202, an audio output unit 2203, an input unit 2204, a sensor 2205, a display unit 2206, a user input unit 2207, an interface unit 2208, a memory 2209, a processor 2210, and the like.

Those skilled in the art can understand that the terminal 2200 may further include a power supply (such as a battery) for supplying power to the components, and the power supply may be logically connected to the processor 2210 through a power management system, thereby implementing functions such as charging management, discharging management, and power consumption management through the power management system. The terminal structure shown in FIG. 22 does not constitute a limitation to the terminal. The terminal may include more or fewer components than shown, or have some components combined, or have a different component arrangement. Details are not described herein again.

It should be understood that in this embodiment of this application, the input unit 2204 may include a graphics processing unit (Graphics Processing Unit, GPU) 22041 and a microphone 22042. The graphics processing unit 22041 processes image data of static pictures or videos obtained by an image capture apparatus (such as a camera) in a video capture mode or an image capture mode. The display unit 2206 may include a display panel 22061, where the display panel 22061 may be configured in the form of a liquid crystal display, an organic light-emitting diode, or the like. The user input unit 2207 includes at least one of a touch panel 22071 and other input devices 22072. The touch panel 22071 is also referred to as a touch screen. The touch panel 22071 may include two parts: a touch detection apparatus and a touch controller. The other input devices 22072 may include but are not limited to physical keyboards, function buttons (such as volume control buttons and switch buttons), trackballs, mice, and joysticks. Details are not described herein again.

In this embodiment of this application, after receiving downlink data from a network-side device, the radio frequency unit 2201 can transmit the downlink data to the processor 2210 for processing. In addition, the radio frequency unit 2201 can send uplink data to the network-side device. Generally, the radio frequency unit 2201 includes but is not limited to an antenna, an amplifier, a transceiver, a coupler, a low noise amplifier, and a duplexer.

The memory 2209 may be configured to store software programs or instructions as well as various data. The memory 2209 may mainly include a first storage area storing a program or instructions and a second storage area storing data, where the first storage area can store an operating system, an application program or instructions required for at least one function (such as a sound playback function and an image playback function), and the like. In addition, the memory 2209 may include volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 2209 in this embodiment of this application includes but is not limited to these memories and any other suitable types of memories.

The processor 2210 may include one or more processing units. Optionally, the processor 2210 integrates an application processor and a modem processor; where the application processor mainly processes operations related to operating systems, user interfaces, and application programs; and the modem processor mainly processes wireless communication signals, which is, for example, a baseband processor. It can be understood that the above modem processor may alternatively not be integrated into the processor 2210.

The processor 2210 is configured to determine, based on a resource parameter configured for a target low-power signal, at least one candidate occasion for the target low-power signal.

The radio frequency unit 2201 is configured to detect, in the at least one candidate occasion, the target low-power signal sent by the network-side device.

The processor 2210 is configured to determine a spatial characteristic of each detected target low-power signal based on the detected target low-power signal, where the spatial characteristic includes at least one of the following: a spatial Rx parameter, a Doppler delay parameter, and a time delay parameter.

It can be understood that the implementation processes of the various implementations mentioned in this embodiment can refer to the relevant descriptions in the method embodiment 300 and achieve a same or corresponding technical effects. To avoid repetition, details are not described herein again.

An embodiment of this application further provides a network-side device, including a processor and a communication interface. The communication interface and the processor are coupled, and the processor is configured to run a program or instructions to implement the steps of the method embodiment shown in FIG. 18. The network-side device embodiment corresponds to the foregoing network-side device method embodiment, and the implementation processes and implementations of the foregoing method embodiment are all applicable to the network-side device embodiment, with the same technical effects achieved.

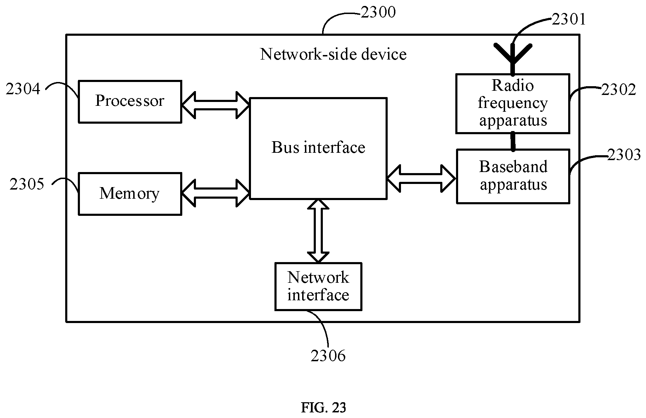

Specifically, an embodiment of this application further provides a network-side device. As shown in FIG. 23, the network-side device 2300 includes: an antenna 2301, a radio frequency apparatus 2302, a baseband apparatus 2303, a processor 2304, and a memory 2305. The antenna 2301 is connected to the radio frequency apparatus 2302. In an uplink direction, the radio frequency apparatus 2302 receives information through the antenna 2301, and sends the received information to the baseband apparatus 2303 for processing. In a downlink direction, the baseband apparatus 2303 processes information to be sent and sends the information to the radio frequency apparatus 2302, and the radio frequency apparatus 2302 processes the received information and sends the information out through the antenna 2301.

The method executed by the network-side device in the foregoing embodiments may be implemented in the baseband apparatus 2303, and the baseband apparatus 2303 includes a baseband processor.

The baseband apparatus 2303 may, for example, include at least one baseband board, where the baseband board is provided with multiple chips. As shown in FIG. 23, one of the chips is, for example, a baseband processor, which is connected to the memory 2305 through a bus interface, to call a program in the memory 2305 and execute the operations of the network-side device shown in the foregoing method embodiment.

The network-side device may further include a network interface 2306, where the interface is, for example, a common public radio interface (Common Public Radio Interface, CPRI).

Specifically, the network-side device 2300 in this embodiment of this application further includes: a program or instructions stored in the memory 2305 and executable on the processor 2304, where the processor 2304 calls the program or instructions in the memory 2305 to implement the methods executed by the modules shown in FIG. 20, with the same technical effects achieved. To avoid repetition, details are not described herein again.

An embodiment of this application further provides a readable storage medium, where a program or instructions are stored in the readable storage medium. When the program or instructions are executed by a processor, the processes of the foregoing low-power signal receiving method embodiment are implemented, or the processes of the foregoing low-power signal sending method embodiment are implemented, with the same technical effects achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disk. In some embodiments, the readable storage medium may be a non-transitory readable storage medium.

An embodiment of this application further provides a chip, where the chip includes a processor and a communication interface. The communication interface and the processor are coupled, and the processor is configured to run a program or instructions to implement the processes of the foregoing low-power signal receiving method embodiment, or to implement the processes of the foregoing low-power signal sending method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product. The computer program/program product is stored in a storage medium, and the computer program/program product is executed by at least one processor to implement the processes of the foregoing low-power signal receiving method embodiment, or to implement the processes of the foregoing low-power signal sending method embodiment, with the same technical effects achieved. To avoid repetition, details are not described herein again.

An embodiment of this application further provides a wireless communication system, including: a terminal and a network-side device. The terminal may be configured to implement the steps of the low-power signal receiving method as described above, and the network-side device may be configured to implement the steps of the low-power signal sending method as described above.

It should be noted that, the terms "include", "comprise", or any other variants thereof herein are intended to cover non-exclusive inclusion, so that a process, method, article or apparatus including a series of elements not only includes those elements, but also includes other elements not explicitly listed, or further includes elements inherent to such process, method, article or apparatus. Without further limitation, an element defined by the statement "including a ..." does not exclude the presence of other identical elements in the process, method, article or apparatus including the element. In addition, it should be pointed out that the scope of the methods and apparatuses in the implementations of this application is not limited to performing functions in the order shown or discussed, and may alternatively include performing functions in a substantially simultaneous manner or in a reverse order according to the functions involved. For example, the described method may be performed in a different order than described, and various steps may further be added, omitted, or combined. In addition, features described with reference to some examples may be combined in other examples.

Through the description of the above implementations, those skilled in the art can clearly understand that the foregoing method embodiments may be implemented by means of a computer software product plus a necessary general hardware platform, and certainly may alternatively be implemented by hardware. The computer software product may be stored in a storage medium (such as ROM, RAM, magnetic disk, or optical disk), and includes several instructions to enable a terminal or network-side device to execute the methods described in the embodiments of this application.

The embodiments of this application have been described above in conjunction with the drawings, but this application is not limited to the specific implementations described above. The foregoing specific implementations are only illustrative rather than restrictive. Those of ordinary skill in the art can still make many forms of implementations under the inspiration of this application, without departing from the purposes of this application and the protection scope of the claims, and all these implementations fall within the protection scope of this application.

## Claims

1. A low-power signal receiving method, comprising:
determining, by a terminal based on a resource parameter configured for a target low-power signal, at least one candidate occasion for the target low-power signal;
detecting, in the at least one candidate occasion by the terminal, the target low-power signal sent by a network-side device; and
determining, by the terminal, a spatial characteristic of each detected target low-power signal based on the detected target low-power signal, wherein the spatial characteristic comprises at least one of the following: a spatial Rx parameter, a Doppler delay parameter, and a time delay parameter.

2. The method according to claim 1, wherein the resource parameter comprises at least one of the following:
a sending period of a target low-power signal;
a reception time window duration of a target low-power signal;
candidate occasion information within a reception time window of a target low-power signal;
candidate occasion information within one sending period;
spatial characteristics corresponding to each candidate occasion; and
a repetition number of a target low-power signal.

3. The method according to claim 2, wherein the candidate occasion information comprises at least one of the following:
a time duration of one candidate occasion;
a time interval between two adjacent candidate occasions;
a time interval between two adjacent candidate occasion sets;
the number of candidate occasions;
the number of candidate occasion sets; and
the number of candidate occasions in one candidate occasion set.

4. The method according to claim 2, wherein the spatial characteristics corresponding to each candidate occasion comprise at least one of the following:
within a same target time period, target low-power signals corresponding to candidate occasions in a same candidate occasion set have a same spatial characteristic;
within a same target time period, target low-power signals corresponding to candidate occasions in a same candidate occasion set have different spatial characteristics;
within a same target time period, target low-power signals corresponding to candidate occasions whose candidate occasion locations or candidate occasion indices satisfy a predefined relationship have a same spatial characteristic;
within a same target time period, target low-power signals corresponding to candidate occasions have a same spatial characteristic;
across target time periods, target low-power signals corresponding to candidate occasions in a same candidate occasion set have a same spatial characteristic;
across target time periods, target low-power signals corresponding to candidate occasions in a same candidate occasion set do not have a same spatial characteristic; and
across target time periods, target low-power signals corresponding to candidate occasions in two candidate occasion sets satisfying a first predetermined relationship among different candidate occasion sets have a same spatial characteristic.

5. The method according to claim 2, wherein the resource parameter comprises at least one set of resource parameters, and within one target time period, the spatial characteristics corresponding to each candidate occasion satisfy one of the following:
target low-power signals corresponding to candidate occasions configured in one set of resource parameters have a same signal characteristic;
for candidate occasions configured in one set of resource parameters, target low-power signals corresponding to candidate occasions whose candidate occasion locations or candidate occasion indices satisfy a predefined relationship have a same spatial characteristic; and
for multiple candidate occasion sets configured in one set of resource parameters, target low-power signals corresponding to candidate occasions in a same candidate occasion set have a same signal characteristic.

6. The method according to any one of claims 1 to 5, wherein the target low-power signal comprises at least one of the following: a first low-power signal and a second low-power signal; and the determining, by a terminal based on a resource parameter configured for a target low-power signal, at least one candidate occasion for the target low-power signal comprises at least one of the following:
determining, by the terminal based on resource parameters configured for the first low-power signal and the second low-power signal respectively, at least one candidate occasion for the first low-power signal and at least one candidate occasion for the second low-power signal; and
obtaining, by the terminal, a time resource parameter configured for the first low-power signal and a time offset parameter of the second low-power signal relative to the first low-power signal; and determining, by the terminal, time resource information of at least one first candidate occasion for the first low-power signal based on the time resource parameter configured for the first low-power signal, and determining time resource information of at least one second candidate occasion for the second low-power signal based on the time resource information of the at least one first candidate occasion for the first low-power signal and the time offset parameter.

7. The method according to claim 6, wherein the time offset parameter is a time offset between the first candidate occasion for the first low-power signal and the first candidate occasion for the second low-power signal within one target time period; and the determining time resource information of at least one second candidate occasion for the second low-power signal based on the time resource information of the at least one first candidate occasion for the first low-power signal and the time offset parameter comprises:
determining, by the terminal based on time resource information of the 1st first candidate occasion for the first low-power signal, a time location of the 1st second candidate occasion for the second low-power signal; and
determining, by the terminal based on the time location of the 1st second candidate occasion for the second low-power signal, a time location of another second candidate occasion for the second low-power signal within the target time period, wherein the another second candidate occasion is a second candidate occasion other than the 1st second candidate occasion for the second low-power signal within the target time period.

8. The method according to claim 6, wherein the time offset parameter is a time offset between the 1st first candidate occasion for the first low-power signal and the 1st second candidate occasion for the second low-power signal that correspond to a same characteristic within one target time period; and the determining time resource information of at least one second candidate occasion for the second low-power signal based on the time resource information of the at least one first candidate occasion for the first low-power signal and the time offset parameter comprises:
determining, by the terminal based on time resource information of the 1st first candidate occasion for the first low-power signal, a time location of the 1st second candidate occasion for the second low-power signal; and
determining, by the terminal based on the time location of the 1st second candidate occasion for the second low-power signal, a time location of another second candidate occasion for the second low-power signal corresponding to a same characteristic within the target time period, wherein the another second candidate occasion is a second candidate occasion other than the 1st second candidate occasion for the second low-power signal within the target time period.

9. The method according to any one of claims 1 to 8, wherein the method further comprises:
determining, by the terminal based on the at least one candidate occasion for the target low-power signal, an index of each candidate occasion or each candidate occasion set of the target low-power signal in one time window, wherein the time window comprises one of the following: a reception time window of the target low-power signal and a sending period of the target low-power signal.

10. The method according to claim 9, wherein the method further comprises:
determining, by the terminal based on the index of each candidate occasion, a candidate occasion set to which the candidate occasion belongs.

11. The method according to claim 9, wherein the determining, by the terminal, a spatial characteristic of each detected target low-power signal based on the detected target low-power signal comprises:
determining, by the terminal based on a target occasion in which the target low-power signal is detected, the spatial characteristic of each detected target low-power signal in the at least one candidate occasion, wherein the target occasion is one of the at least one candidate occasion.

12. The method according to claim 11, wherein the determining, by the terminal based on a target occasion in which the target low-power signal is detected, the spatial characteristic of each detected target low-power signal in the at least one candidate occasion comprises:
for at least two of the target low-power signals of a same type, determining, by the terminal, spatial characteristics of at least two detected target low-power signals based on one of the following:
the terminal determines that target low-power signals corresponding to target occasions in one candidate occasion set within one target time period satisfy a same spatial characteristic, and that target low-power signals corresponding to target occasions in one candidate occasion set across target time periods satisfy a same spatial characteristic;
the terminal determines that target low-power signals corresponding to target occasions in one candidate occasion set within one target time period satisfy a same spatial characteristic, and that target low-power signals corresponding to target occasions in one candidate occasion set across target time periods do not satisfy a same spatial characteristic;
the terminal determines that target low-power signals corresponding to target occasions within a same target time period do not satisfy a same spatial characteristic;
the terminal determines that target low-power signals corresponding to target occasions across target time periods do not satisfy a same spatial characteristic;
the terminal determines that target low-power signals with a same index within a same target time period satisfy a same spatial characteristic, wherein the index of the target low-power signal is based on at least one of the following: an index of the target occasion, an index of a candidate occasion set to which the target occasion belongs, and information carried in the target low-power signal;
the terminal determines that target low-power signals with a same index across target time periods satisfy a same spatial characteristic, wherein the index of the target low-power signal is based on at least one of the following: an index of the target occasion, an index of a candidate occasion set to which the target occasion belongs, and information carried in the target low-power signal; and
the terminal determines that target low-power signals with a same index within one target time period satisfy a same spatial characteristic, and that target low-power signals with a same index across target time periods do not satisfy a same characteristic, wherein the index of the target low-power signal is based on at least one of the following: an index of the target occasion, an index of a candidate occasion set to which the target occasion belongs, and information carried in the target low-power signal.

13. The method according to claim 11, wherein the determining, by the terminal based on a target occasion in which the target low-power signal is detected, the spatial characteristic of each detected target low-power signal in the at least one candidate occasion comprises:
for two of the target low-power signals of different types, determining, by the terminal based on one of the following, spatial characteristics of at least two target low-power signals detected within one target time period or different target time periods:
determining, by the terminal, that a first low-power signal and a second low-power signal whose corresponding target occasions are in a same candidate occasion set satisfy a same spatial characteristic;
determining, by the terminal, that a first low-power signal whose corresponding target occasion is in a first candidate occasion set and a second low-power signal whose corresponding target occasion is in a second candidate occasion set satisfy a same spatial characteristic, wherein an index of the first candidate occasion set and an index of the second candidate occasion set satisfy a first predetermined relationship;
determining, by the terminal, that a first low-power signal and a second low-power signal whose corresponding target occasions satisfy a second predetermined relationship satisfy a same characteristic;
determining, by the terminal, that a first low-power signal and a second low-power signal with a same index satisfy a same spatial characteristic;
determining, by the terminal, that a first low-power signal and a second low-power signal whose indices satisfy a third predetermined relationship satisfy a same spatial characteristic; and
determining, by the terminal, that a second low-power signal serving as a reference signal of a first low-power signal and the first low-power signal satisfy a same spatial characteristic; wherein
the first low-power signal and the second low-power signal are target low-power signals of different types;
the index of the first low-power signal is based on at least one of the following: an index of the target occasion corresponding to the first low-power signal, an index of a candidate occasion set to which the target occasion corresponding to the first low-power signal belongs, and information carried in the first low-power signal; and
the index of the second low-power signal is based on at least one of the following: an index of the target occasion corresponding to the second low-power signal, an index of a candidate occasion set to which the target occasion corresponding to the second low-power signal belongs, and information carried in the second low-power signal.

14. The method according to any one of claims 1 to 13, wherein the method further comprises:
combining, by the terminal, multiple target low-power signals with a same spatial characteristic.

15. The method according to any one of claims 4, 5, 7, 8, 12, and 13, wherein the target time period comprises one of the following:
a sending period of a first low-power signal;
a sending period of a second low-power signal;
a time period configured in the resource parameter; and
a target time period, wherein the target time period is the least common multiple of a sending period of a first low-power signal and a sending period of a second low-power signal; wherein
the first low-power signal and the second low-power signal are low-power signals of different types.

16. A low-power signal sending method, comprising:
determining, by a network-side device based on a resource parameter configured for a target low-power signal, at least one candidate occasion for the target low-power signal;
sending, by the network-side device, based on a spatial characteristic of a target low-power signal to be sent, the target low-power signal on at least one target occasion among the at least one candidate occasion, wherein the spatial characteristic comprises at least one of the following: a spatial Rx parameter, a Doppler delay parameter, and a time delay parameter.

17. The method according to claim 16, wherein the resource parameter comprises at least one of the following:
a sending period of a target low-power signal;
a reception time window duration of a target low-power signal;
candidate occasion information comprised within a reception time window of a target low-power signal;
candidate occasion information comprised within one sending period;
spatial characteristics corresponding to each candidate occasion; and
a repetition number of a target low-power signal.

18. The method according to claim 17, wherein the candidate occasion information comprises at least one of the following:
a time duration of one candidate occasion;
a time interval between two adjacent candidate occasions;
a time interval between two adjacent candidate occasion sets;
the number of candidate occasions;
the number of candidate occasion sets; and
the number of candidate occasions in one candidate occasion set.

19. The method according to claim 17, wherein the spatial characteristics corresponding to each candidate occasion comprise at least one of the following:
within a same target time period, target low-power signals corresponding to candidate occasions in a same candidate occasion set have a same spatial characteristic;
within a same target time period, target low-power signals corresponding to candidate occasions whose candidate occasion locations or candidate occasion indices satisfy a predefined relationship have a same spatial characteristic;
within a same target time period, target low-power signals corresponding to candidate occasions have a same spatial characteristic;
across target time periods, target low-power signals corresponding to candidate occasions in a same candidate occasion set have a same spatial characteristic;
across target time periods, target low-power signals corresponding to candidate occasions in a same candidate occasion set do not have a same spatial characteristic; and
across target time periods, target low-power signals corresponding to candidate occasions in two candidate occasion sets satisfying a first predetermined relationship among different candidate occasion sets have a same spatial characteristic.

20. The method according to claim 17, wherein the resource parameter comprises at least one set of resource parameters, and within one target time period, the spatial characteristics corresponding to each candidate occasion satisfy one of the following:
target low-power signals corresponding to candidate occasions configured in one set of resource parameters have a same signal characteristic;
for candidate occasions configured in one set of resource parameters, target low-power signals corresponding to candidate occasions whose candidate occasion locations or candidate occasion indices satisfy a predefined relationship have a same spatial characteristic; and
for multiple candidate occasion sets configured in one set of resource parameters, target low-power signals corresponding to candidate occasions in a same candidate occasion set have a same signal characteristic.

21. The method according to any one of claims 16 to 20, wherein the target low-power signal comprises at least one of the following: a first low-power signal and a second low-power signal; and the resource parameter comprises: a resource parameter corresponding to the first low-power signal and a resource parameter corresponding to the second low-power signal, or the resource parameter comprises: a time resource parameter corresponding to the first low-power signal and a time offset parameter of the second low-power signal relative to the first low-power signal.

22. The method according to claim 21, wherein the time offset parameter is a time offset between a first candidate occasion for the first low-power signal and a first candidate occasion for the second low-power signal within one target time period; or the time offset parameter is a time offset between the 1st first candidate occasion for the first low-power signal and the 1st second candidate occasion for the second low-power signal that correspond to a same characteristic within one target time period.

23. The method according to any one of claims 16 to 22, wherein the sending, by the network-side device, based on a spatial characteristic of a target low-power signal to be sent, the target low-power signal on at least one target occasion among the at least one candidate occasion comprises:
for at least two of the target low-power signals of a same type, sending, by the network-side device, the target low-power signal based on one of the following:
within a same target time period, sending, by the network-side device, the target low-power signal on target occasions in a same candidate occasion set by using a same spatial characteristic; and across target time periods, sending, by the network-side device, the target low-power signal on target occasions in a same candidate occasion set by using a same spatial characteristic;
within a same target time period, sending, by the network-side device, the target low-power signal on target occasions in a same candidate occasion set by using a same spatial characteristic; and across target time periods, sending, by the network-side device, the target low-power signal on target occasions in a same candidate occasion set by using different spatial characteristics;
within a same target time period, sending, by the network-side device, the target low-power signal on target occasions by using different spatial characteristics;
across target time periods, sending, by the network-side device, the target low-power signal on target occasions by using different spatial characteristics;
within a same target time period, sending, by the network-side device, target low-power signals with a same index by using a same spatial characteristic, to satisfy a same spatial characteristic, wherein the index of the target low-power signal is based on at least one of the following: an index of the target occasion, an index of a candidate occasion set to which the target occasion belongs, and information carried in the target low-power signal;
across target time periods, sending, by the network-side device, target low-power signals with a same index by using a same spatial characteristic, wherein the index of the target low-power signal is based on at least one of the following: an index of the target occasion, an index of a candidate occasion set to which the target occasion belongs, and information carried in the target low-power signal; and
within a same target time period, sending, by the network-side device, target low-power signals with a same index by using a same spatial characteristic; and across target time periods, sending, by the network-side device, target low-power signals with a same index by using different spatial characteristics; wherein the index of the target low-power signal is based on at least one of the following: an index of the target occasion, an index of a candidate occasion set to which the target occasion belongs, and information carried in the target low-power signal.

24. The method according to any one of claims 16 to 22, wherein the sending, by the network-side device, based on a spatial characteristic of a target low-power signal to be sent, the target low-power signal on at least one target occasion among the at least one candidate occasion comprises:
for two of the target low-power signals of different types, sending, by the network-side device, the target low-power signal within one target time period or different target time periods based on one of the following:
sending, by the network-side device, a first low-power signal and a second low-power signal whose target occasions are in a same candidate occasion set by using a same spatial characteristic, to satisfy a same spatial characteristic;
sending, by the network-side device, a first low-power signal whose target occasion is in a first candidate occasion set and a second low-power signal whose corresponding target occasion is in a second candidate occasion set by using a same spatial characteristic, wherein an index of the first candidate occasion set and an index of the second candidate occasion set satisfy a first predetermined relationship;
sending, by the network-side device, a first low-power signal and a second low-power signal whose target occasions satisfy a second predetermined relationship by using a same spatial characteristic;
sending, by the network-side device, a first low-power signal and a second low-power signal with a same index by using a same spatial characteristic, to satisfy a same spatial characteristic;
sending, by the network-side device, a first low-power signal and a second low-power signal satisfying a third predetermined relationship by using a same spatial characteristic, to satisfy a same spatial characteristic; and
sending, by the network-side device, a first low-power signal and a second low-power signal by using a same spatial characteristic, wherein the second low-power signal is a reference signal of the first low-power signal; wherein
the first low-power signal and the second low-power signal are target low-power signals of different types;
the index of the first low-power signal is based on at least one of the following: an index of the target occasion corresponding to the first low-power signal, an index of the candidate occasion set to which the target occasion corresponding to the first low-power signal belongs, and information carried in the first low-power signal; and
the index of the second low-power signal is based on at least one of the following: an index of the target occasion corresponding to the second low-power signal, an index of the candidate occasion set to which the target occasion corresponding to the second low-power signal belongs, and information carried in the second low-power signal.

25. A low-power signal receiving apparatus, comprising:
a first determining module, configured to determine, based on a resource parameter configured for a target low-power signal, at least one candidate occasion for the target low-power signal;
a detecting module, configured to detect, in the at least one candidate occasion, the target low-power signal sent by a network-side device; and
a second determining module, configured to determine a spatial characteristic of each detected target low-power signal based on the detected target low-power signal, wherein the spatial characteristic comprises at least one of the following: a spatial Rx parameter, a Doppler delay parameter, and a time delay parameter.

26. The apparatus according to claim 25, wherein the second determining module is further configured to determine, based on the at least one candidate occasion for the target low-power signal, an index of each candidate occasion or each candidate occasion set of the target low-power signal in one time window, wherein the time window comprises one of the following: a reception time window of the target low-power signal and a sending period of the target low-power signal.

27. The apparatus according to claim 25 or 26, wherein that the second determining module determines a spatial characteristic of each detected target low-power signal based on the detected target low-power signal comprises:
determining, based on a target occasion in which the target low-power signal is detected, the spatial characteristic of each detected target low-power signal in the at least one candidate occasion, wherein the target occasion is one of the at least one candidate occasion.

28. A low-power signal sending apparatus, comprising:
a third determining module, configured to determine, based on a resource parameter configured for a target low-power signal, at least one candidate occasion for the target low-power signal; and
a sending module, configured to send, based on a spatial characteristic of a target low-power signal to be sent, the target low-power signal on at least one target occasion among the at least one candidate occasion, wherein the spatial characteristic comprises at least one of the following: a spatial Rx parameter, a Doppler delay parameter, and a time delay parameter.

29. The apparatus according to claim 28, wherein that the sending module sends, based on a spatial characteristic of a target low-power signal to be sent, the target low-power signal on at least one target occasion among the at least one candidate occasion comprises:
for at least two of the target low-power signals of a same type, sending the target low-power signal based on one of the following:
within a same target time period, sending the target low-power signal on target occasions in a same candidate occasion set by using a same spatial characteristic; and across target time periods, sending the target low-power signal on target occasions in a same candidate occasion set by using a same spatial characteristic;
within a same target time period, sending the target low-power signal on target occasions in a same candidate occasion set by using a same spatial characteristic; and across target time periods, sending the target low-power signal on target occasions in a same candidate occasion set by using different spatial characteristics;
within a same target time period, sending the target low-power signal on target occasions by using different spatial characteristics;
across target time periods, sending the target low-power signal on target occasions by using different spatial characteristics;
within a same target time period, sending target low-power signals with a same index by using a same spatial characteristic, to satisfy a same spatial characteristic, wherein the index of the target low-power signal is based on at least one of the following: an index of the target occasion, an index of a candidate occasion set to which the target occasion belongs, and information carried in the target low-power signal;
across target time periods, sending target low-power signals with a same index by using a same spatial characteristic, wherein the index of the target low-power signal is based on at least one of the following: an index of the target occasion, an index of a candidate occasion set to which the target occasion belongs, and information carried in the target low-power signal; and
within a same target time period, sending target low-power signals with a same index by using a same spatial characteristic; and across target time periods, sending target low-power signals with a same index by using different spatial characteristics; wherein the index of the target low-power signal is based on at least one of the following: an index of the target occasion, an index of a candidate occasion set to which the target occasion belongs, and information carried in the target low-power signal.

30. The apparatus according to any one of claims 28 or 29, wherein that the sending module sends, based on a spatial characteristic of a target low-power signal to be sent, the target low-power signal on at least one target occasion among the at least one candidate occasion comprises:
for two of the target low-power signals of different types, sending the target low-power signal within one target time period or different target time periods based on one of the following:
sending a first low-power signal and a second low-power signal whose target occasions are in a same candidate occasion set by using a same spatial characteristic, to satisfy a same spatial characteristic;
sending a first low-power signal whose target occasion is in a first candidate occasion set and a second low-power signal whose corresponding target occasion is in a second candidate occasion set by using a same spatial characteristic, wherein an index of the first candidate occasion set and an index of the second candidate occasion set satisfy a first predetermined relationship;
sending a first low-power signal and a second low-power signal whose target occasions satisfy a second predetermined relationship by using a same spatial characteristic;
sending a first low-power signal and a second low-power signal with a same index by using a same spatial characteristic, to satisfy a same spatial characteristic;
sending a first low-power signal and a second low-power signal satisfying a third predetermined relationship by using a same spatial characteristic, to satisfy a same spatial characteristic; and
sending a first low-power signal and a second low-power signal by using a same spatial characteristic, wherein the second low-power signal is a reference signal of the first low-power signal; wherein
the first low-power signal and the second low-power signal are target low-power signals of different types;
the index of the first low-power signal is based on at least one of the following: an index of the target occasion corresponding to the first low-power signal, an index of the candidate occasion set to which the target occasion corresponding to the first low-power signal belongs, and information carried in the first low-power signal; and
the index of the second low-power signal is based on at least one of the following: an index of the target occasion corresponding to the second low-power signal, an index of the candidate occasion set to which the target occasion corresponding to the second low-power signal belongs, and information carried in the second low-power signal.

31. A terminal, comprising a processor and a memory, wherein the memory stores a program or instructions executable on the processor, and when the program or instructions are executed by the processor, the steps of the low-power signal receiving method according to any one of claims 1 to 15 are implemented.

32. A network-side device, comprising a processor and a memory, wherein the memory stores a program or instructions executable on the processor, and when the program or instructions are executed by the processor, the steps of the low-power signal sending method according to any one of claims 16 to 24 are implemented.

33. A readable storage medium, wherein a program or instructions are stored in the readable storage medium, and when the program or instructions are executed by a processor, the steps of the low-power signal receiving method according to any one of claims 1 to 15 are implemented, or the steps of the low-power signal sending method according to any one of claims 16 to 25 are implemented.
